(19) Europäisches Patentamt
European Patent Office
Office européen des brevets

(11) **EP 2 209 221 B1**

(12) **EUROPÄISCHE PATENTSCHRIFT**

(45) Veröffentlichungstag und Bekanntmachung des Hinweises auf die Patenterteilung:
**26.09.2018 Patentblatt 2018/39**

(51) Int Cl.:
*H04B 7/08* *(2006.01)*    *H04B 17/00* *(2015.01)*

(21) Anmeldenummer: **09015825.4**

(22) Anmeldetag: **22.12.2009**

(54) **Empfangsanlage zur Summation gephaster Antennensignale**

Receiver for summating phased antenna signals

Installation de réception destinée à la sommation de signaux d'antennes phasés

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **19.01.2009 DE 102009005063**

(43) Veröffentlichungstag der Anmeldung:
**21.07.2010 Patentblatt 2010/29**

(73) Patentinhaber: **Delphi Delco Electronics Europe GmbH**
**42119 Wuppertal (DE)**

(72) Erfinder:
• **Lindenmeier, Stefan**
**82131 Gauting (DE)**
• **Lindenmeier, Heinz**
**82152 Planegg (DE)**
• **Hopf, Jochen**
**85540 Haar (DE)**
• **Reiter, Leopold**
**82205 Gilching (DE)**

(74) Vertreter: **Manitz Finsterwald Patentanwälte PartmbB**
**Postfach 31 02 20**
**80102 München (DE)**

(56) Entgegenhaltungen:
**EP-A2- 1 422 848    EP-A2- 1 798 870**
**WO-A1-98/34358    US-A1- 2007 135 056**

• ANNAMALAI A ET AL: "Unified analysis of generalized selection diversity with normalized threshold test per branch", 2003 IEEE WIRELESS COMMUNICATIONS AND NETWORKING CONFERENCE RECORD : 16 - 20 MARCH 2003, NEW ORLEANS, LOUISIANA, USA, IEEE OPERATIONS CENTER, PISCATAWAY, NJ, Bd. 2, 16. März 2003 (2003-03-16), Seiten 752-756, XP010639860, DOI: 10.1109/WCNC.2003.1200464 ISBN: 978-0-7803-7700-4
• XINGWEN YI ET AL: "Phase Estimation for Coherent Optical OFDM", IEEE PHOTONICS TECHNOLOGY LETTERS, IEEE SERVICE CENTER, PISCATAWAY, NJ, US, Bd. 19, Nr. 12, 15. Juni 2007 (2007-06-15) , Seiten 919-921, XP011182243, ISSN: 1041-1135, DOI: 10.1109/LPT.2007.897572
• VICTOR A M ET AL: "Improved Y factor noise measurement using the second stage contribution to advantage", ARFTG CONFERENCE DIGEST, 2005. SPRING 2005. 65TH LONG BEACH, CA, USA 17 JUNE 2005, PISCATAWAY, NJ, USA,IEEE, US, 17. Juni 2005 (2005-06-17), Seiten 90-92, XP010830182, DOI: 10.1109/ARFTGS.2005.1500574 ISBN: 978-0-7803-8858-1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Empfangsanlage nach dem Oberbegriff des Anspruchs 1 (vgl. EP 1 798 870 A2) für frequenzmodulierte, bzw. in der Phase modulierte Hochfrequenzsignale für Fahrzeuge mit einer Mehrantennenanlage 1 mit mindestens zwei Antennen Ant1, Ant2... und mit mindestens einem, im Empfangspfad mindestens einer der mindestens zwei Antennen befindlichen, individuell einstellbarem Phasendrehglied Φ1, Φ2,.., einer linearen Kombinationsschaltung 5 und einer nach geschalteten Empfängerschaltung 2, wobei im Empfangspfad mindestens einer der Antennen Ant1, Ant2... ein individuell einstellbares Schaltelement S1,S2.. zur Durchschaltung bzw. Unterbrechung des Signalflusses vorhanden ist und die über die Phasendrehglieder Φ1, Φ2,.. und die einstellbaren Schaltelemente S1,S2.. geleiteten Empfangssignale E1, E2.. der linearen Kombinationsschaltung 5 zugeführt sind und das kombinierte Signal 8 der Empfängerschaltung 2 zugeführt ist

Antennendiversityanlagen dieser Art werden bevorzugt für den UKW-Rundfunkempfang eingesetzt und sind z.B. aus der US 5,517,686, der US 4,079,318 sowie aus der DE 43 26 843 bekannt. Diese Diversitysysteme zielen darauf ab, durch gleichphasige Überlagerung zweier oder auch mehrerer Empfangssignale E1, E2...EN ein größeres kombiniertes Signal 8 zu erzielen als mit einer Einzelantenne, um so im Gebiet mit Mehrwegeausbreitung die Wahrscheinlichkeit von Pegeleinbrüchen zu reduzieren. Damit ergibt sich im kombinierten Signal 8 ein in Bezug auf das Empfängerrauschen im Mittel günstigeres Signalrauschverhältnis.

In der US 5,517,686 wird die Gleichphasung von zwei Empfangssignalen z.B. durch Verwendung einer Hilfsmodulation erzeugt. Hierzu wird eines der beiden Empfangssignale in der Amplitude moduliert. Im Empfangspfad einer der beiden Antennen Ant1, Ant2 in der US 5,517,686 befindet sich ein steuerbares Phasendrehglied. Bei Überlagerung der beiden Empfangssignale im Empfänger verschwindet die durch die Hilfsmodulation erzeugte Frequenzmodulation im Summensignal nur dann, wenn die beiden Empfangsignale gleiche Phasen besitzen. Sind die beiden Phasen der überlagerten Empfangssignale nicht gleich, dann ist das Summensignal zusätzlich in der Frequenz mit dem Ton der Hilfsmodulation moduliert. Mit Hilfe einer Regeleinrichtung wird der Ton der Hilfsmodulation im Frequenzdemodulator erfasst und das Phasendrehglied durch die Regelungen derart eingestellt, dass der Ton der Hilfsmodulation im Summensignal verschwindet und damit die beiden Empfangssignale mit gleicher Phase überlagert werden. Dieses Verfahren nach dem Stand der Technik besitzt jedoch den wesentlichen Nachteil, dass den zu empfangenden Empfangssignalen ein Zusatzsignal in Form einer Hilfsmodulation aufgeprägt werden muss, um die Gleichphasung herbeizuführen. In der DE 10 2006 057 520 ist eine Empfangsanlage mit Gleichphasung von Empfangssignalen E1, E2...EN beschrieben, welche vorteilhaft ohne eine solche Hilfsmodulation auskommt. Eine Empfangsanlage dieser Art kann insbesondere bei mobilen Systemen mit digital modulierten Signalen nach dem MPSK-Verfahren angewandt werden, wie z.B. bei modernen Rundfunk-Satelliten-Empfangs-Systemen nach dem QPSK-Verfahren. Die Gleichphasung wird durch sukzessive gesonderte Feststellung der Spannungen der verschiedenen Antennen Ant1, Ant2...AN unter Anwendungen eines Algorithmus zur Berechnung der Phasen, welche in die verschiedenen Antennen-Zweige eingeschaltet sind, erreicht. Mit einer Diversity Anordnung dieser Art ist die Problematik verbunden, dass schwache Empfangssignale E1, E2...EN mit großem Rauschanteil die Gleichphasung nicht exakt erlauben und das Signal-zu-Rauschverhältnis (SNR) insgesamt zu schlecht ist. Dies trifft insbesondere in Empfangsgebieten mit ausgeprägter Mehrwegeausbreitung mit starken Empfangspegel-Einbrüchen zu. In der DE 10 2006 057 520 sind mehrere Verfahren zur Gleichphasung beschrieben, welche anhand der Leistungspegel der Empfangssignale der Antennen Ant1, Ant2...AN herbeigeführt wird.

Es ist bekannt, dass der Datenstrom jeder digitalen Signalübertragung zur Synchronisation der Übertragung als "Burst-Signale" oder "Rahmendaten" bezeichnete Signale enthält, welche gemäß dem entsprechenden Standard festgelegt sind und wiederholend im zeitlichen Abstand der Rahmendauer TR gesendet werden. Im Burst-Signal sind Symbole enthalten, welche die Referenzphase 80 zur Phasensynchronisation des Systems enthalten. Insbesondere um die sichere Synchronisation auf den Symboltakt auch bei hohen Geschwindigkeiten sicher zu stellen, ist sowohl die Rahmenfrequenz als auch die zeitliche Burst-Signal-Dauer TB des Burst-Signals angemessen groß gewählt. Die in den zwischen den Burst-Signalen empfangenen Symbolen enthaltene Information besteht somit in der jeweils aktuellen Phasenabweichung der hochfrequenten Trägerschwingung von der im Empfänger vorliegenden Referenzphase 80, welche aus den Burst-Signalen abgeleitet ist. Die empfängerseitige Detektion der in den gesendeten Nutzsymbolen enthaltenen Trägerphasen kann im Empfänger dann gesichert stattfinden, wenn das Nutz-Rauschverhältnis (SNR) hinreichend groß ist und das System durch die Burst-Signale auf den Symboltakt synchronisiert ist. Ein grundsätzliches Problem ergibt sich jedoch aus dem Sachverhalt, dass beim mobilen Empfang die Trägerphase in einem durch Mehrwegeausbreitung gestörten Empfangsfeld über der Fahrstrecke s sehr stark schwankt, wobei diese Schwankungen zu Fehldetektionen der Symbole führen, wenn z. B. bei einem 4PSK-System der Fehlphasenhub nicht erkennbar kleiner ist als $\pm \pi/4$. Die Referenzphase des Empfangssignals liegt im Empfänger an Hand der empfangen Burstsignale in hinreichend kurzen Zeitabständen laufend aktualisiert vor. Das heißt die Phase der Übertragungsfunktion des Funkfeldes und damit des Empfangssignals, welche sich im mobilen Betrieb laufend ändert, wird im Empfänger anhand der Referenzphase 80 stets in der Weise in der Phase korrigierend gedreht, so dass die einzelnen, die Information tragenden Symbole in Bezug auf diese Referenzphase 80 jeweils den richtigen Phasenquadranten zugeordnet sind, soweit dieses Signal mit hinreichend großem SNR vorliegt. Das kombinierte Signal 8 der Mehrantennenanlage 1 ist dann maximal, wenn sich die einzelnen Empfangssignale E1, E2,..EN in der Kombinationsschaltung gleichphasig in einer gemeinsamen - als Sollphase bezeichneten - Phasenlage überlagern, deren Unterschied im Empfänger in jedem Augenblick zur dort vorliegenden Referenzphase 80 die Symbolinformation repräsentiert. Die einzelnen Empfangssignale E1, E2...EN sollen also unter einer gemeinsamen Sollphase im kombinierten Signal 8 überlagert werden. Die Sollphase ist somit in jedem Augenblick eine durch entsprechende Einstellung der Phasendrehglieder allen Empfangssignalen E1, E2...EN gemeinsame Phase, welche zunächst einen im Bezug zur Referenzphase unbestimmten Wert besitzt. Im Augenblick des Empfangs von Referenzsymbolen in einem Burst-Signal liefern deren systemspezifische Phasen somit die Referenzphase 80 im Empfänger bis zur nächsten Aktualisierung der Referenzphase 80 durch darauffolgende Burst-Signale mit weiteren Referenzsymbolen. Insbesondere beim Empfang in schlecht versorgten Gebieten sind die Empfangssignale E1, E2...EN häufig stark verrauscht, so dass der beschriebene Empfangsmechanismus nicht fehlerfrei ist und das System aufgrund häufiger Fehldetektionen der Symbole zu große Bitfehlerraten auftreten, die das System desynchronisieren.

Der Artikel ANNAMALAI A ET AL: "Unified analysis of generalized selection diversity with normalized threshold test per branch", 2003 IEEE WIRELESS COMMUNICATIONS AND NETWORKING CONFERENCE RECORD : 16 - 20 MARCH 2003, NEW ORLEANS, LOUISIANA, USA, IEEE OPERATIONS CENTER, PISCATAWAY, NJ, Bd. 2, 16. März 2003 (2003-03-16), Seiten 752-756, XP010639860, DOI: 10.1109/WCNC.2003.1200464 ISBN: 978-0-7803-7700-4 befasst sich mit einer Analyse von Selection-Diversity-Systemen in einem Szenario mit Mehrwegeausbreitung mit auf einen Referenzwert des Signalrauschverhältnisses (SNR) bezogenem Signal-Schwellentest pro Signalzweig. Als Kriterium dient der Momentanwert des SNR jedes Zweiges im Verhältnis zu dem SNR-Wert desjenigen Signalzweiges mit dem besten Signal mit dem Ziel, die Signale solcher Zweige mit schwachen Signalen, welche die vorgegebene Signalschwelle unterschreiten, von der Überlagerung mit den anderen Signalen auszuschließen. Hierfür wird ein mathematischer Rahmen für realisierte drahtlose Signalkanäle entwickelt.

Das in dem Artikel XINGWEN YI ET AL: "Phase Estimation for Coherent Optical OFDM", IEEE PHOTONICS TECHNOLOGY LETTERS, IEEE SERVICE CENTER, PISCATAWAY, NJ, US, Bd. 19, Nr. 12, 15. Juni 2007 (2007-06-15), Seiten 919-921, XP011182243, ISSN: 1041-1135, DOI: 10.1109/LPT.2007.897572 beschriebene System ist auf OFDM- Modulation (orthogonal frequency-division-multiplexing) bezogen und befasst sich mit der Bestimmung der Phasen von kohärenten optischen Signalkanälen mit Hilfe mindestens eines optischen Pilot-Trägers mit dem Ziel, die Selbst-Phasenmodulation in einem IO-OFDM-Kanal zu vermeiden. Das OFDM-Signal besteht aus einer Vielzahl von in der Frequenz dicht benachbarten, digital in der Phase modulierten optischen Trägerschwingungen, welche sich zu einem zeitlich stark schwankenden Signal vom Charakter ähnlich dem eines Rauschsignals überlagern.

In dem Artikel VICTOR A M ET AL: "Improved Y factor noise measurement using the second stage contribution to advantage", ARFTG CONFERENCE DIGEST, 2005. SPRING 2005. 65TH LONG BEACH, CA, USA 17 JUNE 2005, PISCATAWAY, NJ, USA,IEEE, US, 17. Juni 2005 (2005-06-17), Seiten 90-92, XP010830182, DOI: 10.1109/ARFTGS.2005.1500574 ISBN: 978-0-7803-8858-1 ist ein Verfahren angegeben zur Verbesserung der als Y-Faktor bekannten automatisierten Methode zur Rauschzahl-Messung unter Zuhilfenahme des Rauschbeitrags der zweiten Stufe. Dabei zeigt sich, dass zwischen der Rauschzahl-Messung nach der automatisierten Y-Faktor-Methode und der verbesserten Y-Faktor-Methode unter Zuhilfenahme der zweiten Stufe signifikante Unterschiede in der gemessenen Rauschzahl auftreten können.

Die US 2007/135056 A1 beschreibt ein Breitband-Funksystem, worin das in einer Remote-Unit empfangene Hochfrequenz-Signal über eine leitungsgeführte Signalübertragung einer Host-Unit zugeführt wird, welche ihrerseits im Rahmen eines Zellenfunk-Systems mit einer Empfangsstation in Funkverbindung steht. In der Remote-Unit wird ein Pilotton einer bestimmten Frequenz und Leistung generiert, welcher dem empfangenen Hochfrequenz-Signal zur Weitergabe an die Host-Unit überlagert wird. Dort wird der Pilotton ausgewertet und das Hochfrequenz-Signal wird - gemessen an der Stärke des Pilottons und in Bezug auf das Eigenrauschen - mithilfe eines Regelmechanismus in geeigneter Leistung an die Empfangsstationen ausgesendet.

Eine Methode zur Feststellung des Signal-Rauschverhältnisses (SNR) mithilfe eines in einem digital modulierten Kommunikations-Kanal empfangenen Frequenz-Bursts (FB) ist in der EP 1 422 848 A2 beschrieben. Die Methode beruht auf der Eignung für Systeme mit "time devision multiple access (TDMA)-Modulation". Zur Verbesserung der Synchronisationseigenschaften des Systems wird ein unmodulierter sinusförmiger Niederfrequenzton von z.B. 67,7kHz als Frequenz-Burst in das einem Hochfrequenzträger aufmodulierte TDMA-Signal eingebunden und gesendet. Empfängerseitig wird nach der Demodulation der Frequenz-Burst mithilfe von Korrelations-Methoden im Gesamtsignal ermittelt, so dass der Datenstrom anhand dieser zeitlichen Markierung synchronisiert ausgewertet werden kann. Ebenso wird anhand des Frequenz-Bursts das Signal-Rauschverhältnis (SNR) ermittelt, anhand dessen die für das System notwendige Frequenznachführung verbessert werden kann.

Der Erfindung liegt die Aufgabe zu Grunde, eine Diversity-Empfangsanlage nach dem Oberbegriff des Hauptanspruchs anzugeben, bei welcher die Gleichphasung von Empfangssignalen E1, E2,..EN auch bei Vorhandensein eines großen Rauschanteils sicher erfolgt und das Signal-zu-Rauschverhältnis (SNR) im kombinierten Signal 8 verbessert ist.

Diese Aufgabe wird durch die Merkmale des Anspruchs 1 gelöst.

Mit der Erfindung ist der besondere Vorteil verbunden, dass durch die gesonderte Ermittlung der Pegel 4 lediglich des Nutzsignal-Anteils, der in den einzelnen verrauschten Empfangssignalen E1, E2.. enthalten ist und welche jeweils durch die Amplitude der Hochfrequenzschwingung des Nutzsignals in den verrauschten Empfangssignalen E1, E2.. gegeben sind, die Gleichphasung der Empfangs-Nutzsignale 3 treffsicher zum Beispiel anhand der Nutzsignal-Pegel 4 und eines der in der DE 10 2006 057 520 angegebenen Verfahren herbeigeführt werden kann. Daraus resultiert der entscheidende Vorteil, dass zum Beispiel beim Empfang von digitalen Satelliten-Signalen auch bei kleinem Linkbudget und schwierigen Empfangsverhältnissen eine zuverlässige Symbol-Detektion möglich ist. Ein weiterer Vorteil einer Empfangsanlage nach der Erfindung besteht darin, dass ohne großen wirtschaftlichen Aufwand die Anzahl der Antennen Ant1, Ant2...AN im Interesse einer Verbesserung des Signal-zu-Rauschverhältnis (SNR) vergrößert werden kann und nur ein HF-Kabel zwischen Antenne und Empfänger vorhanden sein muss.

Die Erfindung wird im Folgenden an Hand der Figuren näher beschrieben. Es zeigen:

Fig. 1:
Erfindungsgemäße Empfangsanlage mit einer Mehrantennenanlage 1 mit Antennen Ant1, Ant2...AN Schaltelementen S1, S2.., Phasendrehglieder Φ1, Φ2.., einer Kombinationsschaltung 5 zur Summation der Empfangssignale E1, E2... der einzelnen Antennen Ant1, Ant2...AN der Mehrantennenanlage 1 und einer nach geschalteten Empfängerschaltung 2 mit HF-ZF-Teil 12 und Selektion 14 zur Trennung des Empfangs-Nutzsignals 3 und des Rauschsignals 21 im kombinierten Signal 8 bzw. im verrauschten Signal 13 am Ausgang des HF-ZF-Teils 12. Die Umwandlung der analogen Signale in das zur Anzeige gelangende Datensignal 70 erfolgt auf übliche Weise durch die Binärdaten-Umwandlung 62, die Detektion des Nutzsignal-Pegels 4 über den Detektor 6 und die Detektion des Rauschsignal-Pegels 23 über den Rauschsignal-Pegelindikator 22 und die Auswertung der Pegel in der logischen Steuereinheit 7, welche über die Schalterstellsignale 15 die Schaltelemente S1, S2.. und über die Phaseneinstellsignale 9 die Phasendrehglieder Φ1, Φ2,.. im Sinne einer Gleichphasung der Nutz-Signalanteile der Empfangssignale E1, E2.. ansteuert.

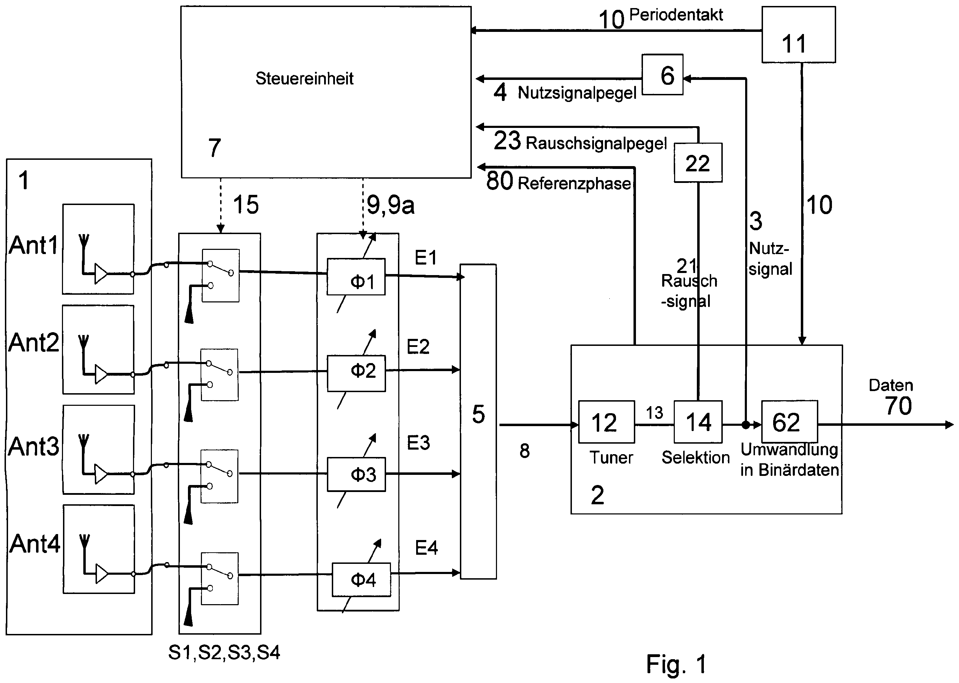

Fig. 2:
Erfindungsgemäße Empfangsanlage wie in Figur 1 jedoch mit in der Empfängerschaltung 2 erzeugter Referenzphase 80 zur Phasen-Korrektur des gephasten kombinierten Signals 8.

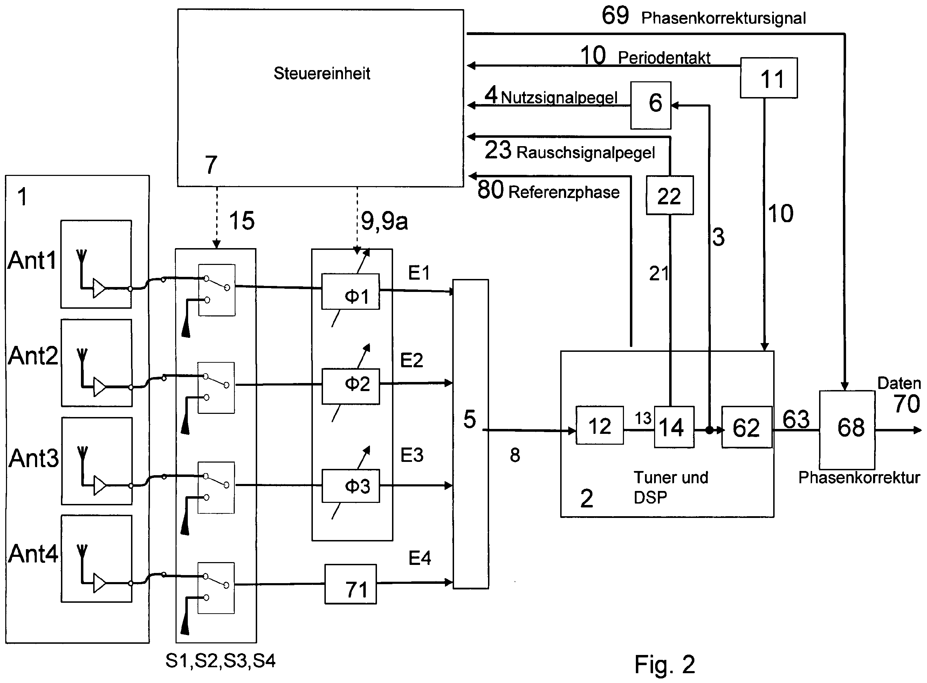

Fig. 3:
Erfindungsgemäße Empfangsanlage wie in Figur 2, wobei der repräsentative Rauschsignalpegel mit Hilfe eines Referenz-Verstärkers gewonnen ist.

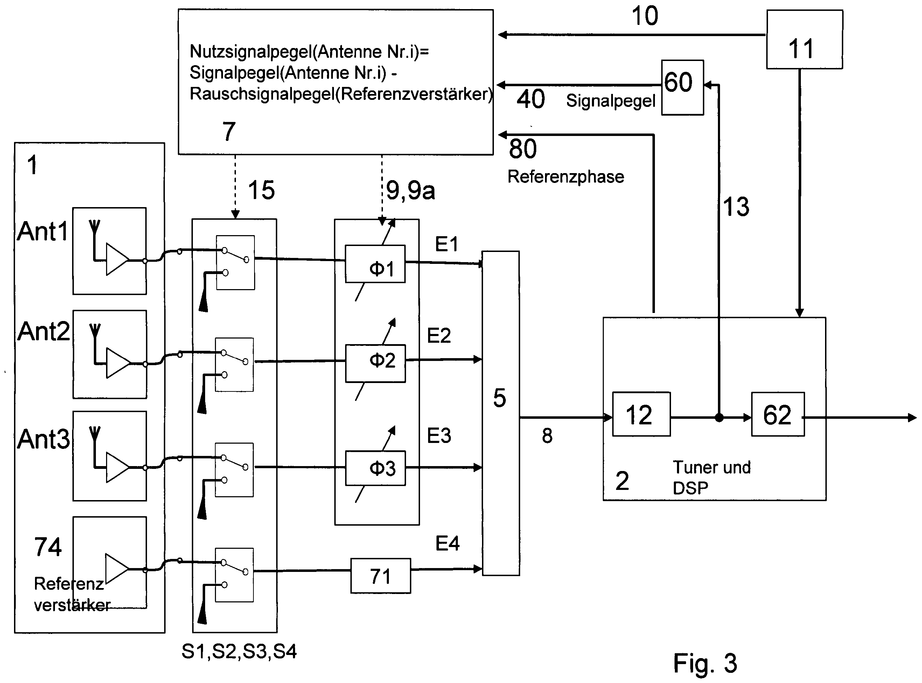

Fig. 4:
Erfindungsgemäße Empfangsanlage wie in Figur 3, wobei das wahre, vom Rauschsignal 21 weitgehend befreite Empfangs-Nutzsignal 3 aus dem verrauschten Empfangssignal durch Korrelation mit dem Digitalcode 63 am Ausgang des Multiplikators 65 gewonnen ist.

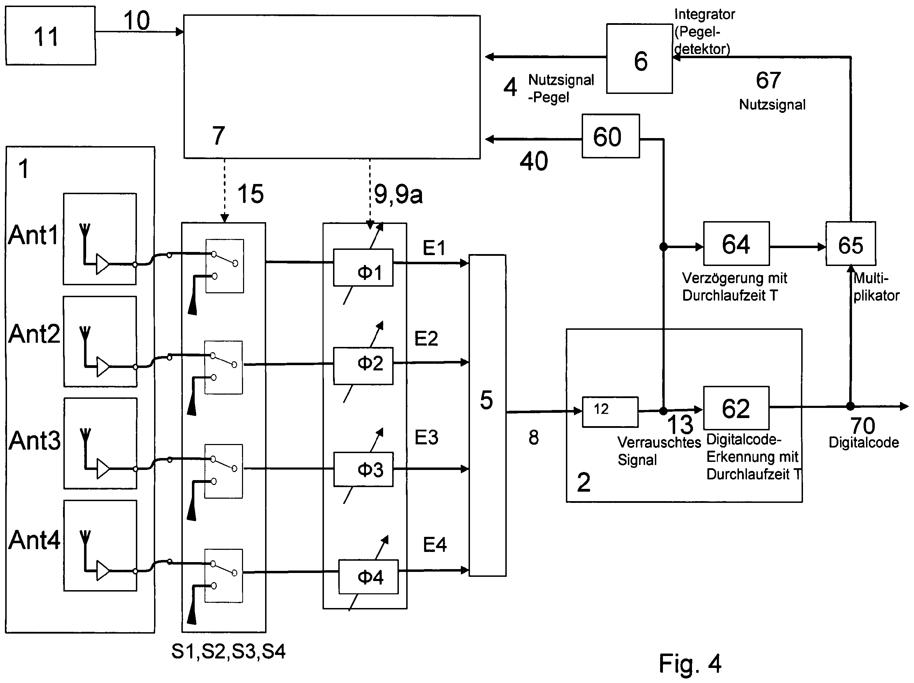

Fig. 5:
Erfindungsgemäße Empfangsanlage wie in Figur 4, mit getrennten Multiplikatoren 65 zur gesonderten Ermittlung des Pegel des Realteils 4a und des Pegel des Imaginärteils 4b des Empfangs-Nutzsignals 3 im kombinierten Signal 8.

Fig. 6:
Empfangsanlage wie in Fig. 1, jedoch mit einer durch einen serienmäßig hergestellten Empfänger gebildeten Empfängerschaltung 2 und einer davon getrennten Diversityeinheit 26, welche eine einfache Schaltlogik, die Schaltelemente S1, S2.. und die Phasendrehglieder Φ1, Φ2.. mit Kombinationsschaltung 5 enthält.

In Fig. 1 ist eine Empfangsanlage nach der Erfindung mit einer Mehrantennenanlage 1 mit Antennen Ant1, Ant2...AN dargestellt.

Der Grundgedanke der vorliegenden Erfindung beruht auf der Gleichphasung von Antennensignalen auf Basis einer selektiven Messung der Pegel des Nutzsignals und des Rauschens, welche jeweils im Empfangsignal enthalten sind. Die Erfindung basiert somit auf der Selektion des Rauschsignals 21 vom verrauschten Empfangssignal E1, E2.. und der anschließenden rechnerischen Ermittlung von Phasenunterschieden zwischen aktuellen Amplituden der vom Rauschsignal 21 befreiten Hochfrequenzträger der unterschiedlichen Empfangssignale E1, E2.. der einzelnen Antennen Ant1, Ant2...AN der Mehrantennenanlage 1. Die vom Rauschen befreiten Empfangssignale E1, E2.. werden im folgenden Empfangs-Nutzsignale 3 bezeichnet. Das Verfahren setzt voraus, dass sich der Funkübertragungskanal während des Vorgangs der Gleichphasung der Empfangs-Nutzsignale 3 hinreichend wenig ändert, so dass die Amplituden der Hochfrequenzträger in den Empfangssignalen E1, E2.. während des Abgleichs der Gleichphasung ausreichend konstant sind. Somit scheiden auch solche Modulationsverfahren für die Anwendung der gegenwärtigen Erfindung aus, bei welchen aufgrund der Modulation rasche Amplitudenänderungen auftreten, so dass während des Abgleichs der Gleichphasung die Amplitude des übertragenen Hochfrequenzträgers nicht hinreichend konstant bleibt. Nach Kenntnis der Phasenunterschiede werden die Phasendrehglieder Φ1, Φ2.. durch in der Steuereinheit 7 erzeugte Phaseneinstellsignale 9 in der Weise eingestellt, dass die Empfangs-Nutzsignale 3 in den entsprechenden Empfangssignale E1, E2,..EN eine gleiche Phase einnehmen und mit dieser Sollphase in der Kombinationsschaltung 5 überlagert werden.

Zu diesem Zweck wird in der Empfängerschaltung 2 eine Selektion 14 zwischen dem Empfangs-Nutzsignal 3 und dem Rauschsignal 21 im kombinierten Signal 8 durchgeführt und der Nutzsignal-Pegel 4 und der Rauschsignal-Pegel 23 am Ausgang der Selektion 14 sind über einen Nutzsignal-Pegelindikator 6 bzw. einen Rauschsignal-Pegelindikator 22 der logischen Steuereinheit 7 zugeführt. Durch zyklisches Durchschalten jeweils nur einer der Antennen Ant1, Ant2...AN im Rahmen eines Prüfzyklus zur Gleichphasung werden zunächst die Signal-zu-Rauschabstände (SNR) durch die logische Steuereinheit 7 der einzelnen Empfangssignale E1, E2,..EN ermittelt und als Kriterium für den weiteren Einstellvorgang nur diejenigen Empfangssignale E1, E2,..EN ausgewählt, deren Signal-zu-Rauschabstand (SNR) ein notwendiges Mindestmaß überschreitet. In einem weiteren Vorgang des Prüfzyklus werden die Empfangssignale E1, E2,..EN beziehungsweise deren Empfangs-Nutzsignale 3 durch sukzessives Zuschalten mit Hilfe der Schalterstellsignale 15 und durch die in der logischen Steuereinheit 7 anhand der Empfangs-Nutzsignale 3 bzw. der Nutzsignal-Pegel 4 ermittelten Einstellungen der Phasendrehglieder Φ1, Φ2,.. in der Phase nahezu gleichgestellt, wodurch der Signal-zu-Rauschabstand (SNR) im kombinierten Signal 8 praktisch maximal ist. Die Phasen der Empfangs-Nutzsignale 3 am Ausgang der Selektion 14 werden in einer digitalen Signalverarbeitung in festen hinreichend kleinen Pegelprüfzyklus-Zeitabständen Tz durch Pegelprüfschaltungen durch Einstellung der Schalter S1,S2,.. und die Phasendrehglieder Φ1, Φ2,.. bestimmt, wobei die Dauer der Pegelprüfschaltungen so kurz gewählt ist, dass sie im Bereich weniger Symbollängen (bis zu ca. 100) des zu übertragenden Datensignals liegt und im Anschluss an die Bestimmung der Phasen der Empfangs-Nutzsignale 3 unmittelbar die nahezu Gleichphasung der Empfangssignale E1, E2,..EN im Sinne einer Optimierung des SNR durchgeführt wird. Die Pegelprüfzyklen werden in den Pegelprüfzyklus-Zeitabständen Tz durch einen Periodentakt 10 ausgelöst, welcher von einem Pegelprüfzyklus-Generator 11 erzeugt und der Steuereinheit 7 und der Empfängerschaltung 2 zur Steuerung des Systems zugeführt wird. Für die Bestimmung der Phasen in der digitalen Signalverarbeitung stehen mehrere Möglichkeiten zur Verfügung.

Es liegt im Wesen eines dynamischen Einstellvorgangs, dass bei zu schlechtem Signal-Rauschverhältnis nach einem Prüfzyklus zwar die Gleichphasung aktualisiert eingestellt sein kann, diese neue Sollphase jedoch fehlerhaft von der richtigen Sollphase abweicht. In einer der Grundformen der vorliegenden Erfindung wird die nach den Prüfzyklen durch die vorgenommenen Phaseneinstellungen zur Gleichphasung der Nutzsignale 3 mögliche Phasenabweichung ΔΦ der Sollphase des Nutzsignals 3 im kombinierten Signal 8 von der im Empfänger beim Empfang von Referenzsymbolen festgestellten Referenzphase 80 in der Weise ausgeglichen, dass die festgestellte Phasenabweichung ΔΦ der logischen Steuereinheit 7 zugeführt ist, durch welche die Phasendrehglieder entsprechend dem Ausgleich eingestellt werden, wodurch alle Nutzsignale 3 der Empfangssignale E1, E2,..EN ihre gemeinsame Sollphase in Form der Referenzphase einnehmen.

Als eine Möglichkeit zur Sicherstellung der Phasentreue des Systems wird in einer vorteilhaften Ausführungsform der Erfindung - wie in Figur 2 - zum Ausgleich der durch die während der Prüfzyklen vorgenommenen Phaseneinstellungen möglichen fehlerhaften Phasenabweichungen der Sollphase ein von der logischen Steuereinheit 7 durch das Phasenkorrektur-Signal 69 gesteuertes Phasenkorrekturglied 68 vor der Phasendetektion im Empfänger eingeschaltet. Beim Empfang von Referenzsymbolen wird die Phasenabweichung der fehlerhaften neuen Sollphase von der Referenzphase 80 im Empfänger festgestellt und der logischen Steuereinheit 7 zur Ansteuerung des Phasenkorrekturglied 68 entsprechend der notwendigen Phasenkorrektur zugeführt. Damit ist das phasenmodulierte Signal in der Empfängerschaltungen 2 durch den Gleichphasungsvorgang nicht verfälscht.

Die einzelnen Empfangs-Nutzsignale 3 der Empfangssignale E1, E2...EN können also unter einer beliebigen, jedoch einer gemeinsamen Sollphase im kombinierten Signal 8 überlagert werden. Die Sollphase mit nach geschaltetem Phasenkorrekturglied 68 ist somit in jedem Augenblick eine allen Antennen-Empfangs-Nutzsignale 3 gemeinsame Phase. Beim Empfang von Referenzsymbolen in einem Burst-Signal ist deren Phase somit die Referenzphase 80 bis zum Empfang der nächsten Aktualisierung der Referenzphase 80 durch weitere Burst-Signale. Das heißt die Phase der Übertragungsfunktion und damit des Empfangssignals einer Antenne, welche sich im mobilen Betrieb laufend ändert, wird im Empfänger anhand der Referenzphase 80 stets in der Weise in der Phase korrigierend gedreht ausgewertet, dass zum Beispiel die einzelnen, die Information übertragenden QPSK-Symbole jeweils dem betreffenden Phasenquadranten richtig zugeordnet sind.

Naturgemäß ist es erforderlich, dass dieses Signal mit hinreichend großem SNR vorliegt.

Die Zeitabstände $T_z$ zwischen den Pegelprüfzyklus-Signalen hinreichend kurz gewählt derart, dass der in diesem Zeitabstand $T_z$ zurückgelegte Fahrweg nicht größer ist als 1/5 der Länge der hochfrequenten Trägerwelle beträgt.

Bei senderseitiger Ausstrahlung eines Burst-Signal mit einer Serie von Referenzsymbolen mit jeweils bekannter, jedoch unterschiedlicher Referenzphase 80 in Form eines Codeworts wird in einer weiteren vorteilhaften Ausgestaltung der Erfindung die Phasenabweichung $\Delta\Phi$ des Nutzsignals 3 im kombinierten Signal 8 empfängerseitig als Mittelwert der einzelnen Phasenabweichungen von der Referenzphase 80 der Gruppe der Referenzsymbole des Codeworts ermittelt. Damit wird mit größerer Sicherheit verhindert, dass bei unsicherer Übertragung einzelner Burst-Signale die Referenzphase 80 in der Empfängerschaltung 2 fehlerhaft erkannt wird. Hierbei muss die durch das Codewort definierte Gruppe der Referenzsymbole nicht notwendigerweise aus unmittelbar aufeinander folgend gesendeten Referenzsymbolen bestehen. Dieses Vorgehen ist auch auf solche Codewörter anwendbar, welche jeweils eine definierte Anzahl von Nutzsymbolen zwischen aufeinander folgend gesendeten Referenzsymbolen enthalten.

In einer weiteren vorteilhaften Ausgestaltung der Erfindung ist der Prüfzyklus zur Gleichphasung der Empfangs-Nutzsignale 3 beim Empfang von Referenzsymbolen in der Weise gestaltet, dass sukzessive jeweils nur eines der Empfangssignale E1, E2.. mit Hilfe der Schalterstellsignale 15 durchgeschaltet wird. Dabei wird die beim Empfang von Referenzsymbolen im Empfänger angezeigte Abweichung des Empfangs-Nutzsignals 3 des betreffenden Empfangssignals E1, E2.. von der jeweils empfangenen Referenzphase 80 als Phasendifferenz $\alpha i$ dem logischen Steuerelement 7 zugeführt. Im logischen Steuerelement 7 wird jeweils ein Phaseneinstellsignal 9 erzeugt, durch welches der zur Nullstellung der Phasendifferenz $\alpha i$ geeignete Phasenwert des betreffenden Phasendrehglieds $\Phi1, \Phi2,..$ eingestellt ist und die Gleichphasung durch zyklisches Durchtauschen aller Empfangssignale E1, E2.. erreicht ist. Dieses Vorgehen ist insbesondere dann sehr effektiv, wenn der gesamte Prüfzyklus für die Gleichphasung aller Empfangs-Nutzsignale 3 während des Empfangs eines Burst-Signals mit den in ihm enthaltenen Referenzsymbolen erfolgt. Dabei kann die Referenzphase 80 für jeden Schritt des zyklischen Gleichphasungsvorgangs anhand von aufeinanderfolgend empfangenen Referenzsymbolen ermittelt werden.

In einer weiteren vorteilhaften Ausgestaltung der Erfindung ist bei senderseitiger Ausstrahlung eines Burstsignals, bestehend aus einer Gruppe von Referenzsymbolen mit unterschiedlichen Referenzphasen 80 in Form eines Codeworts, die im Empfänger angezeigte Abweichung von der Referenzphase 80 als Mittelwert der einzelnen Phasenabweichungen von den Referenzphase der Gruppe der Referenzsymbole des im Empfänger abgelegten Codeworts ermittelt und dieser Mittelwert wird als Phasendifferenz $\alpha i$ bei Durchschaltung des betreffenden Empfangssignals E1, E2.. dem logischen Steuerelement 7 zugeführt. Soll jeweils der gesamte Prüfzyklus für die Gleichphasung aller Empfangs-Nutzsignale 3 während des Empfangs eines Burst-Signals - wie oben beschrieben - mit den in dem Burst-Signal in Form eines Codeworts enthaltenen Referenzsymbolen erfolgen, so kann auf vorteilhafte Weise für jeden Schritt des zyklischen Gleichphasungsvorgangs jeweils der Mittelwert der einzelnen Phasenabweichungen von der Referenzphase der Gruppe der Referenzsymbole als Teil des Codeworts zur Einstellung des betreffenden Phasendrehglieds $\Phi1, \Phi2,..$ ermittelt werden. Anhand der innerhalb eines Burst-Signals aufeinanderfolgend empfangenen Teile des Codeworts in Form von Referenzsymbolgruppen kann somit durch zyklisches Durchtauschen die Gleichphasung aller Nutzsignale 3 in den Empfangssignalen E1, E2.. erfolgen.

Die Ermittlung der Phasen der Empfangs-Nutzsignale 3 durch Messung der Phase des Referenzphasensignals 8 im Empfänger 2 kann in der Weise durchgeführt werden, dass während des Empfangs des senderseitig ausgestrahlten Referenzphasensignals im Rahmen eines Pegel-Prüfzyklus nur jeweils ein Antennensignal durch die Schalter S1-S4 durchgeschaltet ist und damit die Phase des Empfangs-Nutzsignals 3 auf der betreffenden Antenne ermittelt und in der Steuereinheit 7 abgespeichert ist. Dieser Vorgang wird nacheinander für alle Antennen so lange durchgeführt, bis die Phasen aller Antennen-Nutzsignale 3 abgespeichert sind und daraus die Gleichphasung der Antennen-Nutzsignale 3 mittels Einstellung der Phasendrehglieder durch die Steuereinheit 7 bewirkt ist.

Die Gleichphasung der Empfangs-Nutzsignale 3 in den verrauschten Empfangssignalen E1, E2...EN kann beispielhaft durch Bestimmung der Nutzsignal-Pegel 4 als Anteile in den Empfangssignalen E1, E2...EN erfolgen. Hierfür kann folgender Algorithmus für eine Mehrantennenanlage mit N Antennen Ant1,Ant2...AN und Schaltelementen S1, S2..SN und Phasendrehgliedern $\Phi1, \Phi2$ und einer Kombinationsschaltung 5 zur Anwendung kommen. Mit dem in der Rechnereinrichtung 7 abgelegten Algorithmus 16 zur rechnerischen Ermittlung der Phasenunterschiede der am Eingang der Kombinationsschaltung 5 befindlichen Empfangssignale E1, E2.. ist ein Pegelprüfzyklus-Signal 10 in der Weise gestaltet, dass beginnend zwei Nutzsignal-Pegel-Proben 4 bei alternativem Schließen zweier Schaltelemente S1, S2 einer ersten und einer zweiten Antenne Ant1, Ant2...AN und eine Pegelmessprobe bei gleichzeitigem Schließen der beiden diesen Antennen Ant1, Ant2 zugehörigen Schaltelemente S1, S2 gewonnen sind bei jeweils geöffnetem Zustand aller übrigen Schaltelemente S3, ..SN und aus diesen drei Nutzsignal-Pegel-Proben 4 der Phaseunterschied zwischen den zugehörigen, am Eingang der Kombinationsschaltung 5 befindlichen Empfangssignale E1, E2 errechnet ist und durch Einstellung des Phasendrehglieds $\Phi2$ Gleichphasung der beiden Empfangssignale E1, E2 gegeben ist und dass ggfs. zur sukzessiven Gleichphasung des Empfangssignals einer weiteren Antenne Ant3 die Schaltelemente S1, S2 der bereits für Gleichphasung eingestellten Phasendrehglieder $\Phi1, \Phi2$ der Antennen Ant1, Ant2 - unter Beibehaltung der Einstellung der Phasendrehglieder $\Phi1, \Phi2$ - gleichsinnig geschaltet sind und die derart kombinierten beiden ersten Antennen Ant1, Ant2 hinsichtlich des Ablaufs der Gleichphasung an die Stelle der vormals ersten Antenne Ant1 treten und das Schaltelement S3 der weiteren Antenne Ant3 entsprechend der vormals zweiten Antenne Ant2 zur Ermittlung entsprechender Nutzsignal-Pegel-Proben 4 eingestellt sind und durch Einstellung des Phasendrehglieds $\Phi3$ der weiteren

Antenne Ant3 anhand der ermittelten Phasendifferenz Gleichphasung der Empfangssignale E1, E2, E3 am Eingang der Kombinationsschaltung 5 erreicht ist und so fort, bis durch Wiederholung des Vorgangs Gleichphasung für alle N Empfangssignale E1, E2, E3,..EN hergestellt ist. Empfangssignals E3 kann auf analoge Weise erfolgen, indem zunächst der Pegel des kombinierten Signals festgestellt und in der Rechnereinrichtung 7 abgelegt wird. Durch Öffnen der Schaltelemente S1 und S2 und durch Schließen des Schaltelements S3 wird an Hand einer möglichst kurzen Pegelmessprobe mit der Pegelprüfdauer $T_p$ zunächst die Amplitude A3 ermittelt und im Speicher der Rechnereinrichtung 7 abgelegt, um anschließend bei geschlossenen Schaltelementen S1 und S2 und S3 den Pegel des dabei auftretenden neu kombinierten Signals 14 festzustellen. Dabei ist die Pegelprüfdauer $T_p$ vorzugsweise so kurz zu wählen, wie dies nach Maßgabe der Empfangskanal-Bandbreite möglich ist. An Hand des Pegels des vorangegangenen kombinierten Signals 14, des Empfangssignals E3 sowie des neuen kombinierten Signals 14 wird dann auf analoge Weise die Gleichphasung des Empfangssignals E3 mit den beiden bereits gleich gephasten Empfangssignalen E1 und E2 herbeigeführt. Dieses Verfahren lässt sich analog zur Gleichphasung beliebig vieler N weiterer Empfangssignale EN von N Antennen Ant1, Ant2...AN anwenden.

Erfindungsgemäß erfolgt die Selektion des Nutzsignals 3 gegenüber dem Rauschsignal 21 in einer Weise, dass der Rauschpegel der Empfangsanlage 2 in der logischen Steuereinheit 7 abgelegt ist und der Leistungspegel des verrauschten Signals 13 gemessen ist und der Leistungspegel des Nutzsignals 3 dadurch bestimmt wird, indem der Rauschleistungspegel von dem Leistungspegel des verrauschten Signals 13 abgezogen wird und damit auch die Amplitude der Nutzschwingung des Nutzsignals 3 ermittelt ist.

Figur 3 zeigt eine erfindungsgemäße Empfangsanlage wie in Figur 2, wobei der repräsentative Rauschsignalpegel mit Hilfe eines Referenz-Verstärkers 74 gewonnen ist. Hierbei erfolgt die Ermittlung des Rauschleistungs-Pegels durch Aufschalten eines Referenzverstärkers 74, dessen Leistung detektiert ist und die Messung der Leistung des verrauschten Empfangssignals 13 einer Antenne Ant1, Ant2...AntN durch Aufschaltung dieser Antenne Ant1, Ant2...AntN. Die Leistung 40 des verrauschten Empfangssignals 13 wird durch den Pegel-Indikator 60 des verrauschten Signals ermittelt. Aus der Kenntnis des Rauschleistung-Pegels und der Leistung des verrauschten Empfangssignals 13 wird die Selektion des Empfangs-Nutzsignals 3 gegenüber dem Rauschsignal in der Weise durchgeführt, dass der Rauschpegel der Empfangsanlage 2 in der logischen Steuereinheit 7 abgelegt ist und der Leistungspegel des verrauschten Signals als Nutz-und Rauschsignal 13 gemessen ist und der Leistungspegel des Empfangs-Nutzsignals 3 bestimmt wird, indem der Rauschleistungspegel von dem Leistungspegel des verrauschten Signals subtrahiert wird und damit die Amplitude der Schwingung des Empfangs-Nutzsignals 3 ermittelt ist.

In einer weiteren vorteilhaften Ausgestaltung der Erfindung erfolgt die die Ermittlung der Phasen der Empfangssignale E1, E2.. durch Vergleich der Phase eines im senderseitig ausgestrahlten Datenstrom enthaltenen Referenzphasencodes mit demselben empfangsseitig gespeicherten Referenzphasencode. Dabei werden nacheinander die Phasen der Empfangssignale E1, E2.. jeweils während des Empfanges des Referenzphasencodes ermittelt, während in der Zeit zwischen dem Empfang der Referenzphasencodes die zuletzt für den Empfang verwendete Antennenkombination und deren Phasung für den Empfang der Daten so lange eingestellt ist, bis die Phasen aller für den Empfang aufgrund ihres genügend hohen SNR verwendbaren Empfangssignale E1, E2.. ermittelt sind. In unmittelbarer zeitlicher Folge wird nach Ermittlung der Phasen der Empfangs-Nutzsignale 3 der Empfangssignale E1, E2.. deren Gleichphasung unmittelbar durchgeführt.

In einer weiteren vorteilhaften Ausgestaltung der Erfindung wird die Selektion des Empfangs-Nutzsignals 3 in der Weise durchgeführt, dass das Datensignal 70 nach der Binärdaten-Umwandlung 62 mit dem verrauschten Signal 13 im Multiplikator 65 korreliert wird. Zum Ausgleich der Signallaufzeit in der Binärdaten-Umwandlung 62 ist ein Zeitverzögerungsglied 64 vorhanden, in welchem zuvor das Datensignal 70 mit dem verrauschten Signal 13 synchronisiert ist, so dass der Maximalwert der komplexen Korrelation dem Pegel des Empfangs-Nutzsignals 3 entspricht. Der Pegel der am Ausgang des Multiplikators 65 anliegenden Empfangs-Nutzsignale 3, 67 wird in einem vorzugsweise als Integrator mit Tiefpass-Funktion ausgeführten Nutzsignal-Pegelindikator 6 festgestellt und der Logischen Steuereinheit 7 zugeführt. Erfindungsgemäß wird bei diesem Vorgehen der Vorteil genutzt, dass das Datensignal 70 bereits weitgehend von der Wirkung des Rauschanteils im verrauschten Signal 13 befreit ist und durch synchronisierte Korrelation dieser beiden Signale im Multiplikator 65 dessen Korrelationssignal mit Gleichanteil 67 nach der Integration im Nutzsignal-Pegelindikator 6 mit Tiefpass-Funktion den Nutzsignal-Pegel 4 in hohem Maß treffsicher repräsentiert.

In einer weiteren vorteilhaften Ausgestaltung der Erfindung erfolgt die Ermittlung des Rauschsignal-Pegels 23 im kombinierten Signal 8 durch Erfassung des Rauschens innerhalb eines Frequenzintervalls, welches zum Empfangs-Frequenzkanal dicht benachbart liegt, jedoch spektrale Anteile des vom Satelliten ausgestrahlten Signals nicht enthält. Bei hinreichender Frequenzbandbreite der Mehrantennenanlage 1, welche dieses Frequenzintervalls zusätzlich überdeckt, kann durch Abstimmung des HF-ZF-Teils 12 (Tuner) der nachfolgenden Empfängerschaltung 2 auf dieses Frequenzintervall der Rauschsignal-Pegel in diesem Intervall erfasst und daraus der Rauschsignal-Pegels 23 im Empfangs-Frequenzkanal repräsentativ erfasst werden. Gleichermaßen kann der Rauschsignal-Pegel 23 durch eine gesonderte, auf dieses Frequenzintervall abgestimmte Empfangsschaltung ermittelt werden. Aufgrund der unmodulierten Amplitude der sinusförmigen Hochfrequenzschwingung des kombinierten Empfangs-Signals 8 und des daraus resultierenden, von der Phasenmodulation unabhängigen Nutzsignal-Pegels 4 kann dieser aus der Gesamtleistung des Empfangs-Signals 8 abzüglich der so ermittelten Rauschleistung im Empfangs-Frequenzkanal angegeben werden. An Hand der auf diese Weise für die einzelnen Antennen gesondert ermittelten Nutzsignal-Pegel 4 der Empfangssignale E1, E2,...EN kann die oben beschriebene Gleichphasung der Empfangs-Nutzsignale 3 sowie die Aussonderung solcher Empfangssignale E1, E2,...EN mit zu schlechtem Signal-Rauschverhältnissen SNR beim Vorgang der Gleichphasung erfolgen. Im Gegensatz zum Nutzsignal-Pegel 4, welcher aufgrund der Mehrwegeausbreitung der empfangenen elektromagnetischen Wellen abhängig von der Fahrgeschwindigkeit zeitlich stark schwankt, ist der Rauschsignal-Pegel 23 in den Empfangssignale E1, E2,...EN relativ konstant, so dass eine Aktualisierung dieses Messwertes in vergleichsweise großen Zeitabschnitten erfolgen kann. In vorteilhafter Weise kann diese Aktualisierung zum Beispiel im Rahmen der Burst-Signale erfolgen.

Um die alternative Abstimmung des HF-ZF-Teils 12 (Tuner) auf dieses Frequenzintervals zu vermeiden kann in vorteilhafter Weise nach der Frequenzumsetzung im HF-ZF-Teil 12 das Signal über zwei Frequenzbandpässe aufgespaltet werden, wobei die Frequenzbandbreite des einen auf den ZF-Nutz-Frequenzkanal abgestimmt ist und nur für diesen durchlässig ist und der andere Frequenzbandpass auf das gesonderte Frequenzintervall abgestimmt und nur für dieses durchlässig ist. Somit besteht die nach dem erstgenannten Bandpass detektierbare Leistungspegel aus der Summe (P1) aus dem Nutzsignal-Pegel 4 (Pnutz) und dem der Bandbreite (Bnutz) des ZF-Nutz-Frequenzkanals entsprechenden Rauschleistungspegel (Pr1). Entsprechend kann nach dem zweitgenannten Bandpass die der Bandbreite (Bint) des gesonderten Frequenzintervalls entsprechende Rauschleistung (Pr2) detektiert werden. Weißes Rauschen in der Frequenzumgebung des Nutz-Frequenzkanals vorausgesetzt, ergibt sich für die Rauschleistung Pr1 = k*Bnutz und Pr2 = K*Bint Proportionalität mit der Frequenzbandbreite des betreffenden Bandpasses.

Damit liefern die beiden detektierten Leistungen P1 und Pr2 den Nutzsignal-Pegel 4 = Pnutz wie folgt:

$$Pnutz = P1 - \Pr 2 \times \frac{Bnutz}{B\,\text{int}}$$

Die beiden Leistungen P1 und Pr2 können also gleichzeitig detektiert werden, so dass durch Ermittlung des Nutzsignal-Pegels 4 (Pnutz) zum Beispiel in der logischen Steuereinheit 7 in jedem Augenblick zeitnah vorliegt. Anhand des so ermittelten Nutzsignal-Pegels 4 kann jedes der Empfangsignale der Antennen Ant1, Ant2...AntN, erfindungsgemäß zur Gleichphasung der Empfangs-Nutzsignale 3 z. B. nach einem der in der DE 10 2006 057 520 angegebenen Verfahren treffsicher erfolgen.

Eine weitere aufgrund ihrer Einfachheit vorteilhafte Möglichkeit besteht in der Verwendung zweier Bandpässe mit unterschiedlichen Bandbreiten Bnutz und B2 mit B2 > Bnutz, deren Mittenfrequenz jeweils gleich der Mittenfrequenz des ZF-Nutz-Frequenzkanals ist und Bnutz mindestens den Nutz-Frequenzkanal überdeckt. Mit der detektierten Leistung P1 am Ausgang des erstgenannten Bandpasses und der detektierten Leistung P2 am Ausgang des zweitgenannten Bandpasses so ergibt sich der Nutzsignal-Pegel 4 = Pnutz aus den beiden detektierten Leistungen

$$P1 = Pnutz + k \bullet Bnutz \qquad \text{und} \qquad P2 = Pnutz + k \bullet B2$$

und dem Verhältnis der beiden Bandbreiten wie folgt:

$$Pnutz = \frac{P1 - P2 \bullet \dfrac{Bnutz}{B2}}{1 - \dfrac{Bnutz}{B2}}$$

Die Bestimmungen des Nutzsignal-Pegel 4 = Pnutz kann dabei umso genauer erfolgen, je größer das Verhältnis B2/Bnutz gewählt werden kann. Dieses Verhältnis erfährt jedoch seine Begrenzung durch die in der Regel manchmal nur eingeengte Verfügbarkeit der von anderen Funkdiensten freien, an den Nutz-Frequenzkanal angrenzenden Frequenzbereiche, so dass nur entsprechend schmale gesonderte Frequenzintervalle nutzbar sind. Für den Fall, dass solche Frequenzintervalle aufgrund der spektralen Belegung durch angrenzende Funkdienst nicht zur Verfügung stehen, kann die Ermittlung des Nutzsignal-Pegels 4 wie im Zusammenhang mit der Figur 4 beschrieben, ermittelt werden.

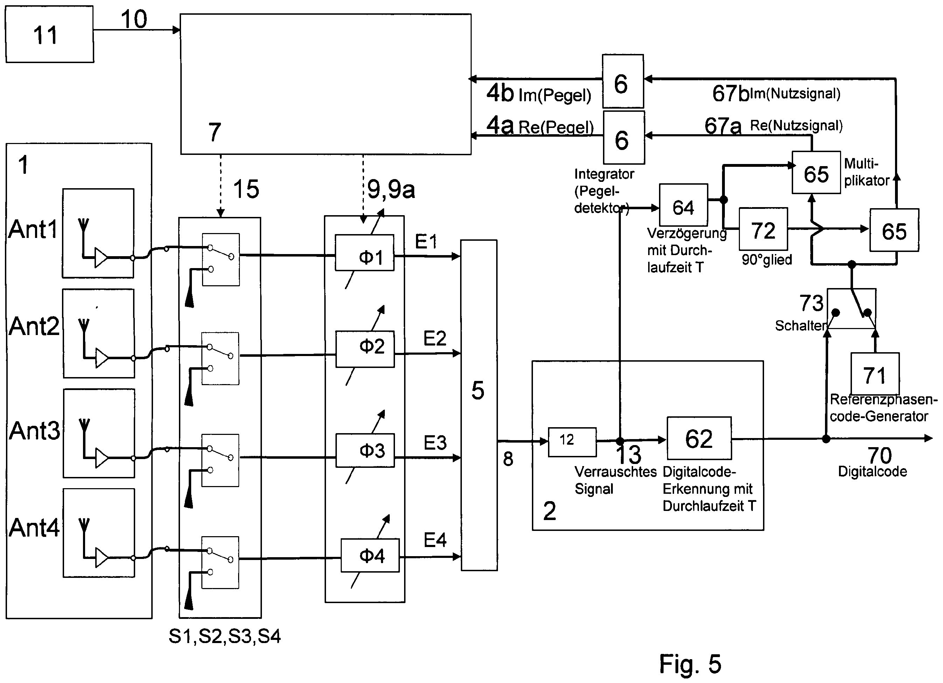

In einer weiteren vorteilhaften Ausgestaltung der Erfindung erfolgt die Bestimmung der Phasen der Empfangs-Nutzsignale 3 der Empfangssignale E1, E2.. in Figur 5 während der Übertragung des Referenzphasencodes durch komplexe Korrelation des im Empfangssignal E1, E2.. enthaltenen Referenzphasencodes mit einem in einem Referenzphasen - Codegenerator 71 erzeugten Referenzphasencode. Hierbei beschreibt der komplexe Wert des Maximums der komplexen Korrelationsfunktion im Betrag den Pegel des Empfangs-Nutzsignals 3 und dessen Winkelargument die Phase des Empfangs-Nutzsignals 3 des eben betrachteten Empfangssignals E1, E2... Dazu kann in einer vorteilhaften Logikschaltung das Empfangssignal 61 mit dem darin enthaltenen Referenzphasencode parallelisiert werden, wobei dieses einmal direkt und einmal parallel über ein 90° Phasendrehglied 72 jeweils mit dem vom Code-Generator 71 abgegebenen Referenzphasencode multipliziert wird. Der dabei entstehende Realteil des Nutzsignals mit Referenzphasencode 67a und der Imaginärteil des Nutzsignals mit Referenzphasencode 67b werden jeweils über einen Pegeldetektor 6 als Realteil 4a und Imaginärteil 4b des komplexen Pegels des im Empfangssignal 61 enthaltenen Referenzphasencodes an das Steuerelement 7 gegeben. Zur Einstellung des Maximum der Korrelationsfunktion wird die Zeitverzögerung T in dem Verzögerungsglied 64 vorteilhaft so eingestellt, dass der in dem Empfangssignal 61 enthaltene Referenzphasencode mit dem vom empfängerseitigen Code-Generator 71 abgegebenen Referenzphasencode synchron ist. Die Funktionselemente für diese Korrelation können auch zur Ermittlung der Nutzsignal-Pegel 4 der Empfangssignale E1, E2.. oder deren Überlagerung verwendet werden. Dazu wird der Schalter 73 umgelegt.

In einer weiteren vorteilhaften Ausgestaltung mit einer Empfangsanlage nach der Erfindung wird eine serienmäßig hergestellte Empfängerschaltung 2 und eine davon getrennte Diversityeinheit 26 mit einem logischen Steuerelement 20 sowie den Schaltelementen S1, S2.. und den Phasendrehgliedern Φ1, Φ2.. mit Kombinationsschaltung 5 gestaltet. Die Ermittlung der Phasen und der Pegel wird auf Seite der Empfängerschaltung 2 durchgeführt. Beispielhaft sind hierfür die Selektionseinrichtung 14 und die Binärdaten-Umwandlung 62 zu einer digitalen Signalverarbeitungseinheit 81 zusammengefasst, welche mit einer Auswerteeinheit 18 in Verbindung steht. In der Auswerteeinheit 18 wird die Bestimmung der durchzuführenden Schalt- und Phasenstellungen durchgeführt, welche in einer, den Antennen Ant2...AntN zugeordneten Diversityeinheit 26 einzustellen sind. Hierzu sendet die Auswerteeinheit 18 einem in der Diversityeinheit 26 befindlichen logischen Steuerelement 20 für die Einstellung der Schalter und Phasenschieber ein Steuersignal 19 zu, welches mit Hilfe von Frequenzweichen 21 über das Empfängerleitung 28 zwischen dem Empfänger 2 und der Diversityeinheit 26 übertragen wird.

**Liste der Bezeichnungen**

Mehrantennenanlage 1
Empfängerschaltung 2
Empfangs-Nutzsignale 3
Nutzsignal-Pegel 4
Pegel des Realteils 4a
Pegel des Imaginärteils 4b
Kombinationsschaltung 5
Nutzsignal-Pegelindikator 6
Logische Steuereinheit 7
kombiniertes Signal 8
Phaseneinstellsignal 9
Periodentakt 10
Pegelprüfzyklus-Generator 11
HF-ZF-Teil 12
Verrauschtes Signal 13
Selektionseinrichtung 14
Schalterstellsignale 15
Algorithmus 16
Auswerteeinheit 18
Steuersignal 19
logisches Steuerelement 20
Rauschsignal 21
Rauschsignal-Pegelindikator 22
Rauschsignal-Pegel 23
Diversityeinheit 26
Frequenzweiche 27
Empfängerleitung 28

EP 2 209 221 B1

Pegel-Indikator des verrauschten Signals 60

Binärdaten-Umwandlung 62

Digitalcode 63

Verzögerungsglied 64

Multiplikator 65

Korrelationssignal mit Gleichanteil 67

Realteil des Korrelationssignals mit Gleichanteil 67a

Imaginärteil des Korrelationssignals mit Gleichanteil 67b

Phasen-Korrekturglied 68

Phasen-Korrektursignal 69

Datensignal 70

Referenz-Phasencode-Generator 71

90°-Phasendrehglied 72

Referenzverstärker 74

Referenzphase 80

Digitale Signalverarbeitungseinheit 81

Antennen Ant1, Ant2...AntN,

Schaltelemente S1, S2..

Fahrstrecke s

Burst-Signal-Dauer TB

Rahmendauer TR

Pegelprüfzyklus- Zeitabstand $T_z$

Empfangssignale E1, E2...EN

Phasendrehglieder $\Phi 1$, $\Phi 2$..

Pegelprüfdauer $T_p$

Phasen $\Phi_i$ der Empfangssignale E1, E2...EN

Phasendifferenz $\alpha_i$

Phasenveränderungswert d. Empfangssignals 8 vor und nach d. Gleichphasung $\Delta\Phi$

**Patentansprüche**

1. Empfangsanlage für frequenzmodulierte, bzw. in der Phase modulierte Hochfrequenzsignale für Fahrzeuge mit einer Mehrantennenanlage (1) mit mindestens zwei Antennen (Ant1, Ant2, ...) und mit mindestens einem, im Empfangspfad mindestens einer der mindestens zwei Antennen befindlichen, individuell einstellbarem Phasendrehglied ($\Phi 1$, $\Phi 2$, ..), einer linearen Kombinationsschaltung (5) und einer nachgeschalteten Empfängerschaltung (2), wobei im Empfangspfad mindestens einer der Antennen (Ant1, Ant2 ...) ein individuell einstellbares Schaltelement (S1,S2, ..) zur Durchschaltung bzw. Unterbrechung des Signalflusses vorhanden ist, und wobei die über die Phasendrehglieder ($\Phi 1$, $\Phi 2$, ..) und die einstellbaren Schaltelemente (S1,S2, ..) geleiteten Empfangssignale (E1, E2, ..) der linearen Kombinationsschaltung (5) zugeführt sind und das kombinierte Signal (8) der Empfängerschaltung (2) zugeführt ist, wobei

   - durch zyklisches Durchschalten der Schaltelemente (S1, S2, ..) von jeweils nur einem Empfangssignal (E1, E2, ..) der Antennen (Ant1, Ant2, ...) im Rahmen eines Prüfzyklus, gesteuert durch eine logische Steuereinheit (7), die einzelnen Empfangssignale (E1, E2, ...) gesondert ermittelt werden,
   - in der Empfängerschaltung (2) eine Selektionseinrichtung (14) vorhanden ist, an deren Ausgang die Phasenabweichungen der Empfangssignale (E1, E2, ...) in einer digitalen Signalverarbeitung in festen Prüfzyklus-Zeitabständen Tz durch Prüfschaltungen - realisiert durch Einstellungen der Schalter (S1, S2, ...) und der Phasendrehglieder ($\Phi 1$, $\Phi 2$, ...) - bei einer Dauer $T_p$ der Prüfschaltungen von weniger als etwa 100 Symbollängen des zu übertragenden Datensignals bestimmt werden, und wobei
   - im Rahmen des Prüfzyklus die Empfangssignale (E1, E2, ..) nacheinander durch sukzessives Zuschalten mit Hilfe der durch Schalterstellsignale (15) gesteuerten Schalter (S1,S2,..) und durch die in der logischen Steuereinheit (7) anhand der Empfangssignale (E1, E2, ..) ermittelte Einstellung der Phasendrehglieder ($\Phi 1$, $\Phi 2$, ..) in der Phase nahezu gleichgestellt werden, so dass alle Empfangssignale (E1, E2, ..) nahezu eine als Sollphase bezeichnete gemeinsame Phase einnehmen, wodurch der Signal-zu-Rauschabstand (SNR) im kombinierten Signal (8) maximal ist,

   **dadurch gekennzeichnet, dass**

- eine getrennte Bestimmung des im verrauschten kombinierten Signal (8) enthaltenen Rauschsignals (21) der Empfangsanlage und des Empfangs-Nutzsignals (3) sowie eine getrennte Ermittlung des Rauschsignal-Leistungspegels (23) der Empfangsanlage und des Nutzsignal-Leistungspegels (4) erfolgt, und **dass**

- die Selektion des Empfangs-Nutzsignals (3) gegenüber dem Rauschsignal (21) der Empfangsanlage in einer Weise durchgeführt wird, dass der Rauschsignal-Leistungspegel der Empfangsanlage (2) in der logischen Steuereinheit (7) abgelegt ist und der Leistungspegel des verrauschten Empfangssignals (E1, E2, E3,..) als Nutz- und Rauschsignal-Leistungspegel gemessen ist und der Nutzsignal-Leistungspegel (4) des Empfangs-Nutzsignals (3) bestimmt wird, indem der Rauschsignal-Leistungspegel (23) von dem Leistungspegel des verrauschten Empfangssignals (E1, E2, ..) subtrahiert wird und damit die Amplitude der Schwingung des Empfangs-Nutzsignals (3) ermittelt ist, um mit dieser Amplitude die Gleichphasung der Empfangs-Nutzsignale (3) in den verrauschten Empfangssignalen (E1, E2, ..) durchzuführen.

2. Empfangsanlage nach Anspruch 1,
   **dadurch gekennzeichnet, dass**
   die nach den Prüfzyklen durch die vorgenommenen Phaseneinstellungen zur Gleichphasung der Empfangs-Nutzsignale (3) der Empfangssignale (E1, E2, ...) mögliche Phasenabweichung $\Delta\Phi$ der Sollphase des Empfangs-Nutzsignals (3) von der im Empfänger beim Empfang von Referenzsymbolen festgestellten Referenzphase (80) in der Weise ausgeglichen wird, dass die festgestellte Phasenabweichung $\Delta\Phi$ der logischen Steuereinheit (7) zugeführt ist, durch welche die Phasendrehglieder ($\Phi1, \Phi2, ...$) entsprechend dem Ausgleich eingestellt werden, wodurch alle Antennen-Empfangs-Nutzsignale (3) ihre gemeinsame Sollphase in Form der Referenzphase annehmen.

3. Empfangsanlage nach Anspruch 1,
   **dadurch gekennzeichnet, dass**
   eine durch den Prüfzyklus bedingte Phasenabweichung $\Delta\Phi$ des Empfangs-Nutzsignal (3) im kombinierten Signal (8) in der Weise korrigiert ist, dass im Empfangszweig nach der Kombinationsschaltung (5) ein Phasenkorrekturglied (68) vorhanden ist, dem ein Phasenkorrektursignal (69) zugeführt ist, welches aus der im Empfänger festgestellten Phasenabweichung $\Delta\Phi$ der Sollphase des Empfangs-Nutzsignals (3) im kombinierten Signal (8) zwischen einem vor- und nach dem Prüfzyklus empfangenen Referenzsymbol mit gleicher Referenzphase (80) abgeleitet ist, so dass ein phasenmoduliertes kombiniertes Signal (8) durch die Gleichphasung nicht verfälscht wird.

4. Empfangsanlage nach Anspruch 2 und 3,
   **dadurch gekennzeichnet, dass**
   bei senderseitiger Ausstrahlung eines Burstsignals mit einer Serie von Referenzsymbolen in Form eines Codeworts mit jeweils bekannter, jedoch unterschiedlicher Referenzphase (80) die im Empfänger angezeigte Phasenabweichung $\Delta\Phi$ des Empfangs-Nutzsignals (3) im kombinierten Signal (8) von der Referenzphase (80) empfängerseitig als Mittelwert der einzelnen Phasenabweichungen von den Referenzphase (80) der Gruppe der Referenzsymbole des Codeworts ermittelt ist.

5. Empfangsanlage nach Anspruch 1,
   **dadurch gekennzeichnet, dass**
   der Prüfzyklus in der Weise gestaltet ist, dass sukzessive jeweils nur eines der Empfangssignale (E1, E2, ...) mit Hilfe der Schalterstellsignale (15) durchgeschaltet wird und die beim Empfang von Referenzsymbolen im Empfänger angezeigte Abweichung des Empfangs-Nutzsignals (3) des betreffenden Empfangs-signals (E1, E2..) von der Referenzphase (80) als Phasendifferenz $\alpha_i$ der logischen Steuereinheit (7) zugeführt ist, durch welches der zur Nullstellung der Phasendifferenz $\alpha_i$ geeignete Phasenwert des betreffenden Phasendrehglieds ($\Phi1, \Phi2,..$) eingestellt ist und die Gleichphasung nach zyklischer Behandlung aller Empfangssignale (E1, E2..) auf diese Art erreicht ist, wobei der gesamte Prüfzyklus für die Gleichphasung aller Empfangs-Nutzsignale (3) während des Empfangs eines Burst-Signals anhand der in ihm enthaltenen Referenzsymbole erfolgt.

6. Empfangsanlage nach Anspruch 2,
   **dadurch gekennzeichnet, dass**
   während des Empfangs der senderseitig ausgestrahlten Referenzsymbole mit den ihnen zugeordneten bekannten Referenzphasen (80) im Rahmen eines Prüfzyklus nur jeweils ein Empfangssignal (E1, E2, ...) durch die Schalter (S1-S4) zum Empfänger durchgeschaltet ist und damit die Phase des Signals (8) der betreffenden Antenne im Empfänger ermittelt und in der logischen Steuereinheit (7) abgespeichert ist und dieser Vorgang nacheinander für alle Antennen so lange durchgeführt wird, bis die Phasen aller Antennen-Empfangs-Nutzsignale (3) abgespeichert sind und daraus die Gleichphasung der Antennen-Empfangs-Nutzsignale (3) mittels Einstellung der Phasendrehglieder durch die logische Steuereinheit (7) bewirkt ist.

**7.** Empfangsanlage nach einem der Ansprüche 1 bis 6,
**dadurch gekennzeichnet, dass**
die Zeitabstände ($T_z$) zwischen den Pegelprüfzyklus-Signalen (10) so kurz gewählt sind, dass der in diesem Zeitabstand ($T_z$) zurückgelegte Fahrweg nicht größer ist als 1/4 der Länge der hochfrequenten Trägerwelle.

**8.** Empfangsanlage nach einem der Ansprüche 1 bis 7,
**dadurch gekennzeichnet, dass**
in der Mehrantennenanlage (1) N Antennen (Ant1, Ant2, ..., AntN) und Schaltelemente (S1, S2, ..., SN) vorhanden sind und mit einem in der logischen Steuereinheit (7) abgelegten Algorithmus (16) zur rechnerischen Ermittlung der Phasenunterschiede der am Eingang der Kombinationsschaltung (5) befindlichen Empfangssignale (E1, E2, ...) ein Prüfzyklus-Signal (10) in der Weise gestaltet ist, dass beginnend zwei Nutzsignal-Pegel-Proben (4) bei alternativem Schließen zweier Schaltelemente (S1, S2) einer ersten und einer zweiten Antenne (Ant1, Ant2) und eine Nutzsignal-Pegel-Probe (4) bei gleichzeitigem Schließen der beiden diesen Antennen (Ant1, Ant2) zugehörigen Schaltelemente (S1, S2) gewonnen sind bei jeweils geöffnetem Zustand aller übrigen Schaltelemente (S3, .., SN) und aus diesen drei Nutzsignal-Pegel-Proben (4) der Phasenunterschied zwischen den zugehörigen, am Eingang der Kombinationsschaltung (5) befindlichen Empfangssignale (E1, E2) errechnet ist und durch Einstellung des Phasendrehglieds (Φ2) Gleichphasung der beiden Empfangssignale (E1, E2) gegeben ist und dass ggfs. zur sukzessiven Gleichphasung des Empfangssignals einer weiteren Antenne (Ant3) die Schaltelemente (S1, S2) der bereits für Gleichphasung eingestellten Phasendrehglieder (Φ1, Φ2) der Antennen (Ant1, Ant2) - unter Beibehaltung der Einstellung der Phasendrehglieder (Φ1, Φ2) - gleichsinnig geschaltet sind und die derart kombinierten beiden ersten Antennen (Ant1, Ant2) hinsichtlich des Ablaufs der Gleichphasung an die Stelle der vormals ersten Antenne (Ant1) treten und das Schaltelement (S3) der weiteren Antenne (Ant3) entsprechend der vormals zweiten Antenne (Ant2) zur Ermittlung entsprechender Nutzsignal-Pegel-Proben (4) eingestellt sind und durch Einstellung des Phasendrehglieds (Φ3) der weiteren Antenne (Ant3) anhand der ermittelten Phasendifferenz Gleichphasung der Empfangssignale (E1, E2, E3) am Eingang der Kombinationsschaltung (5) erreicht ist und so fort, bis durch Wiederholung des Vorgangs die gleichphasige Überlagerung für alle N Empfangssignale (E1, E2, E3,.., EN) im kombinierten Signal (8) hergestellt ist.

**9.** Empfangsanlage nach einem der Ansprüche 1 bis 8,
**dadurch gekennzeichnet, dass**
zur Ermittlung des Rauschsignal-Leistungspegels ein Referenzverstärker aufgeschaltet ist, dessen Leistung detektiert ist, und dass die Messung der Leistung des verrauschten Empfangssignals (13) einer Antenne (Ant1, Ant2, ..., AntN) durch Aufschaltung dieser Antenne (Ant1, Ant2, ..., AntN) durch die einstellbaren Schaltelemente (S1, S2, ...) und durch Detektion ihrer Signalleistung (40) bestimmt ist.

**10.** Empfangsanlage nach einem der Ansprüche 1 bis 9,
**dadurch gekennzeichnet, dass**
der Rauschsignal-Leistungspegel (23) im kombinierten Signal (8) innerhalb eines Frequenzintervalls, welches zum Empfangs-Frequenzkanal benachbart liegt, jedoch spektrale Anteile eines vom Satelliten ausgestrahlten Signals nicht enthält, ermittelt ist, wobei die Frequenzbandbreite der Mehrantennenanlage (1) dieses Frequenzintervall zusätzlich überdeckt und ein auf das Frequenzintervall abgestimmter, frequenzselektiv gestalteter Rauschpegel-Indikator vorhanden ist, durch welchen der Rauschsignal-Leistungspegel (23) in diesem Frequenzintervall ermittelt ist und daraus der Rauschsignal-Leistungspegel (23) im Empfangs-Frequenzkanal repräsentativ erfasst ist und jeweils durch Erfassung der Gesamtleistung eines der Empfangssignale (E1, E2,..., EN) dessen Nutzsignal-Leistungspegel (4) ermittelt ist.

**11.** Empfangsanlage nach einem der Ansprüche 1 bis 10,
**dadurch gekennzeichnet, dass**
einer Frequenzumsetzung in einem HF-ZF-Teil (12) zwei Frequenzbandpässe mit unterschiedlichen Bandbreiten Bnutz und B2 mit B2 > Bnutz, nachgeschaltet sind, wobei die beiden Frequenzbandpässe mit ihren Durchlassfrequenzbereichen jeweils den ZF-Nutz-Frequenzkanal überdecken und die Leistung P1 am Ausgang des erstgenannten Frequenzbandpasses und die Leistung P2 am Ausgang des zweitgenannten Bandpasses detektiert sind und aus diesen beiden Leistungen und dem Verhältnis der beiden Bandbreiten (Bnutz/B2) der Nutzsignal-Pegel (4) in der logischen Schalteinrichtung (7) ermittelt ist und an Hand der so ermittelten Nutzsignal-Pegel (4) die Gleichphasung der Empfangs-Nutzsignale (3) nach einem Algorithmus erfolgt.

**12.** Empfangsanlage nach einem der Ansprüche 1 bis 11,
**dadurch gekennzeichnet, dass**
die Ermittlung der Phasen und der Pegel auf Seite der Empfängerschaltung (2) durchgeführt wird und eine Auswerteeinheit (18) die Bestimmung der durchzuführenden Schalt- und Phasenstellungen durchführt, welche in einer, den Antennen (Ant2, ..., AntN) zugeordneten Diversityeinheit (26) einzustellen sind, und dass die Auswerteeinheit (18) dazu einem in der Diversityeinheit (26) befindlichen logischen Steuerelement (20) für die Einstellung der Schalter und Phasenschieber ein Steuersignal (19) sendet, welches mit Hilfe von Frequenzweichen (27) über die Empfängerleitung (28) zwischen der Empfängerschaltung (2) und der Diversityeinheit (26) übertragen wird.

## Claims

1. A reception system for radio frequency signals, which are frequency modulated or modulated in phase, for vehicles comprising a multi-antenna system (1) having at least two antennas (Ant1, Ant2, ...) and having at least one individually settable phase rotation element (Φ1, Φ2, ..) located in a reception path of at least one of the at least two antennas, having a linear combination circuit (5) and having a receiver circuit (2) connected downstream, wherein an individually settable switching element (S1, S2, ..) for switching through or interrupting the signal flow is present in the reception path of at least one of the antennas (Ant1, Ant2 ...), and wherein received signals (E1, E2, ..) conducted via the phase rotation elements (Φ1, Φ2, ..) and via the settable switching elements (S1, S2, ..) are supplied to the linear combination circuit (5) and a combined signal (8) is supplied to the receiver circuit (2), wherein

   - the individual received signals (E1, E2, ...) are determined separately by a cyclic switching through of the switching elements (S1, S2, ..) of a respective only one received signal (E1, E2, ...) of the antennas (Ant1, Ant2, ...) within the framework of a test cycle, controlled by a logical control unit (7);
   - wherein a selection device (14) is present in the receiver circuit (2), with phase deviations of the received signals (E1, E2, ...) being determined at the output of said selection device (14) by test circuits - implemented by settings of the switches (S1, S2, ...) and of the phase rotation elements (Φ1, Φ2, ...) - in a digital signal processing at fixed test cycle time intervals Tz with a duration $T_p$ of the test circuits of less than approximately 100 character lengths of the data signal to be transmitted; and wherein
   - the received signals (E1, E2, ..) are almost equalized in phase consecutively within the framework of the test cycle by a successive switching in with the aid of the switches (S1, S2, ..), controlled by switch setting signals (15), and by the setting of the phase rotation elements (Φ1, Φ2, ..) which is determined in the logical control unit (7) with reference to the received signals (E1, E2, ..) such that all the received signals (E1, E2, ..) almost adopt a common phase called a desired phase, whereby the signal-to-noise ratio (SNR) is at a maximum in the combined signal (8),

   **characterized in that**

   - a separate determination of the noise signal (21) of the reception system and of the useful received signal (3) included in the noisy combined signal (8) takes place and a separate determination of the noise signal power level (23) of the reception system and of the useful signal power level (4) takes place; and **in that**
   - the selection of the useful received signal (3) with respect to the noise signal (21) of the reception system is carried out in such a manner that the noise signal power level of the reception system (2) is stored in the logical control unit (7) and the power level of the noisy received signal (E1, E2, E3, ..) is measured as a useful signal power level and noise signal power level and the useful signal power level (4) of the useful received signal (3) is determined **in that** the noise signal power level (23) is subtracted from the power level of the noisy received signal (E1, E2, ..) and the amplitude of the oscillation of the useful received signal (3) is thus determined in order to carry out the phase alignment of the useful received signals (3) in the noisy received signals (E1, E2, ..) at this amplitude.

2. A reception system in accordance with claim 1,
   **characterized in that**
   the phase deviation $\Delta\Phi$ of the desired phase of the useful received signal (3) from the reference phase (80) determined in the receiver on the reception of reference symbols, which phase deviation $\Delta\Phi$ is possible after the test cycles by the performed phase settings for the phase alignment of the useful received signals (3) of the received signals (E1, E2, ...), is compensated in such a manner that the determined phase deviation $\Delta\Phi$ is supplied to the logical control unit (7) by which the phase rotation elements (Φ1, Φ2, ...) are set in accordance with the compensation, whereby all the useful received antenna signals (3) adopt their common desired phase in the form of the reference phase.

3. A reception system in accordance with claim 1,
   **characterized in that**

a phase deviation $\Delta\Phi$ of the useful received signal (3) in the combined signal (8) caused by the test cycle is corrected in such a manner that a phase correction element (68) is present in the reception branch after the combination circuit (5) and a phase correction signal (69) is supplied to it which is derived from the phase deviation $\Delta\Phi$ determined in the receiver of the desired phase of the useful received signal (3) in the combined signal (8) between a reference symbol which is received before and after the test cycle and which has the same reference phase (80) such that a phase-modulated combined signal (8) is not falsified by the phase alignment.

4. A reception system in accordance with claim 2 and claim 3,
**characterized in that,**
on a transmission at the transmitter side of a burst signal comprising a series of reference symbols in the form of a code word having respective known, but different reference phases (80), the phase deviation $\Delta\Phi$ displayed in the receiver of the useful received signal (3) in the combined signal (8) from the reference phase (80) is determined at the receiver side as a mean value of the individual phase deviations from the reference phase (80) of the group of reference symbols of the code word.

5. A reception system in accordance with claim 1,
**characterized in that**
the test cycle is designed in such a manner that a respective only one of the received signals (E1, E2, ...) is successively switched through with the aid of the switch setting signals (15) and the deviation of the useful received signal (3) of the respective received signal (E1, E2 ..) from the reference phase (80) displayed in the receiver on the reception of reference symbols is supplied to the logical control unit (7) as a phase difference $\alpha_i$ whereby the phase value of the respective phase rotation element ($\Phi$1, $\Phi$2, ..) suitable for the zero position of the phase difference $\alpha_i$ is set and the phase alignment is achieved in this manner after the cyclic treatment of all the received signals (E1, E2 ..), with the total test cycle for the phase alignment of all the useful received signals (3) taking place during the reception of a burst signal by means of the reference symbols included therein.

6. A reception system in accordance with claim 2,
**characterized in that,**
during the reception of the reference symbols transmitted at the transmitter side with the known reference phases (80) associated with them, only one respective received signal (E1, E2, ...) is switched through to the receiver by the switches (S1-S4) within the framework of a test cycle and the phase of the signal (8) of the respective antenna is thus determined in the receiver and is stored in the logical control unit (7), and this process is carried out successively for all the antennas until the phases of all the useful received antenna signals (3) are stored and the phase alignment of the useful received antenna signals (3) is effected by this by means of the setting of the phase rotation elements by the logical control unit (7).

7. A reception system in accordance with any one of the claims 1 to 6,
**characterized in that**
the time intervals ($T_z$) between the level test cycle signals (10) are selected as so short that the travel path covered in this time interval ($T_z$) is no larger than 1/4 of the length of the radio frequency carrier wave.

8. A reception system in accordance with any one of the claims 1 to 7,
**characterized in that,**
in the multi-antenna system (1), N antennas (Ant1, Ant2, ..., AntN) and switching elements (S1, S2, ..., SN) are present and a test cycle signal (10) is configured by an algorithm (16), stored in the logical control unit (7), for the determination by a calculation of the phase differences of the received signals (E1, E2, ...) present at the input of the combination circuit (5) in such a manner that initially two useful signal level samples (4) are acquired on the alternative closing of two switching elements (S1, S2) of a first and second antenna (Ant1, Ant2) and a useful signal level sample (4) is acquired on the simultaneous closing of the two switching elements (S1, S2) associated with these antennas (Ant1, Ant2) in a respective open state of all the remaining switching elements (S3, .., SN); and **in that** the phase difference between the associated received signals (E1, E2) present at the input of the combination circuit (5) is calculated from these three useful signal level samples (4) and phase alignment of the two received signals (E1, E2) is produced by the setting of the phase rotation element ($\Phi$2); and **in that**, optionally, for the successive phase alignment of the received signal of a further antenna (Ant3), the switching elements (S1, S2) of the phase rotation elements ($\Phi$1, $\Phi$2) of the antennas (Ant1, Ant2) already set for phase alignment are switched in the same sense - while maintaining the setting of the phase rotation elements ($\Phi$1, $\Phi$2) - and the two first antennas (Ant1, Ant2) combined in such a manner take the place of the previously first antenna (Ant1) with respect to the procedure of the phase alignment and the switching element (S3) of the further antenna (Ant3) is set in accordance with the previously second antenna (Ant2) for the determination of corresponding useful signal level samples (4) and phase alignment of the received signals (E1, E2, E3) is achieved at the input of the combination circuit (5) by the setting of the phase rotation element ($\Phi3$) of the further antenna (Ant3) with reference to the determined phase difference and so forth until the in-phase superimposition has been established for all N received signals (E1, E2, E3, .., EN) in the combined signal (8) by repeating the process.

9. A reception system in accordance with any one of the claims 1 to 8,
**characterized in that**
a reference amplifier whose power is detected is connected for the determination of the noise signal power level; and **in that** the measurement of the power of the noisy received signal (13) of an antenna (Ant1, Ant2, ..., AntN) is determined by the connection of this antenna (Ant1, Ant2, ..., AntN) by the settable switching elements (S1, S2, ...) and by the detection of their signal powers (40).

10. A reception system in accordance with any one of the claims 1 to 9,
**characterized in that**
the noise signal power level (23) in the combined signal (8) is determined within a frequency interval which is adjacent to the reception frequency channel, but does not include spectral portions of a signal transmitted by a satellite, with the frequency bandwidth of the multi-antenna system (1) additionally masking this frequency interval and a noise level indicator being present which is matched to this frequency interval, which is configured in a frequency selective manner and by which the noise signal power level (23) is determined in this frequency interval and the noise signal power level (23) is detected therefrom in a representative manner in the reception frequency channel and the useful signal power level (4) of one of the received signals (E1, E2,..., EN) is determined by the detection of the total power of said one of the received signals in each case.

11. A reception system in accordance with any one of the claims 1 to 10,
**characterized in that**
two frequency bandpasses having different bandwidths Bnutz and B2, where B2 > Bnutz, are connected downstream of a frequency conversion in an RF-IF part (12), with the passband frequency ranges of the two frequency bandpasses each masking the IF useful frequency channel, and with the power P1 being detected at the output of the first-named frequency bandpass and the power P2 being detected at the output of the second-named bandpass, and with the useful signal level (4) being determined in the logical control device (7) from these two powers and from the ratio of the two bandwidths (Bnutz/B2) and the phase alignment of the useful received signals (3) taking place in accordance with an algorithm using the useful signal levels (4) determined in this manner.

12. A reception system in accordance with any one of the claims 1 to 11,
**characterized in that**
the determination of the phases and of the levels is carried out at the side of the receiver circuit (2) and an evaluation unit (18) carries out the determination of the switch positions and phase positions which are to be performed and which are to be set in a diversity unit (26) associated with the antennas (Ant2, ..., AntN); and **in that** the evaluation unit (18) for this purpose transmits a control signal (19) to a logical control element (20) located in the diversity unit (26) to set the switches and phase shifters, said control signal being transmitted with the aid of diplexers (27) via the receiver line (28) between the receiver circuit (2) and the diversity unit (26).

**Revendications**

1. Installation de réception pour des signaux haute fréquence modulés en fréquence ou en phase pour des véhicules, comportant une installation à antennes multiples (1) pourvue d'au moins deux antennes (Ant1, Ant2, ...) et au moins un organe de rotation de phase ($\phi1$, $\phi2$, ...) situé dans le trajet de réception de l'une au moins desdites au moins deux antennes et réglable individuellement, un circuit de combinaison linéaire (5) et un circuit récepteur (2) branché en aval,
dans laquelle
dans le trajet de réception de l'une au moins des antennes (Ant1, Ant2, ...), il est prévu un élément de commutation (S1, S2, ...) réglable individuellement pour laisser passer ou pour interrompre un flux de signaux,
et les signaux de réception (E1, E2, ...) menés via les organes de rotation de phase ($\phi1$, $\phi2$, ...) et via les éléments de commutation réglables (S1, S2, ...) sont amenés au circuit de combinaison linéaire (5), et le signal combiné (8) est amené au circuit récepteur (2),

- en mettant cycliquement à l'état passant les éléments de commutation (S1, S2, ...) d'un seul signal de réception (E1, E2, ...) respectif des antennes (Ant1, Ant2, ...), les signaux de réception individuels (E1, E2, ...) sont déterminés séparément dans le cadre d'un cycle de contrôle commandé par une unité de commande logique (7),

- dans le circuit récepteur (2) est prévu un moyen de sélection (14) à la sortie duquel les écarts de phase des signaux de réception (E1, E2, ...) sont définis lors d'un traitement numérique de signaux à des intervalles temporels fixes Tz du cycle de contrôle par des circuits de contrôle - réalisés par réglages des commutateurs (S1, S2, ...) et des organes de rotation de phase ($\phi$1, $\phi$2, ...) - pour une durée $T_p$ des circuits de contrôle de moins d'environ 100 longueurs de symbole du signal de données à transmettre, et

- dans le cadre du cycle de contrôle, les signaux de réception (E1, E2, ...) sont approximativement égalisés en phase successivement par mise en circuit successive à l'aide des commutateurs (S1, S2, ...) commandés par les signaux de commande de commutation (15) et par le réglage des organes de rotation de phase ($\phi$1, $\phi$2, ...) déterminé dans l'unité de commande logique (7) à l'aide des signaux de réception (E1, E2, ...), de sorte que tous les signaux de réception (E1, E2, ...) prennent approximativement une phase commune désignée par phase de consigne, moyennant quoi le rapport signal-bruit (SNR) dans le signal combiné (8) est au maximum, **caractérisé en ce que**

- il s'effectue une définition séparée du signal de bruit (21), contenu dans le signal combiné (8) bruité, de l'installation de réception et du signal utile de réception (3), ainsi qu'une détermination séparée du niveau de puissance de signal de bruit (23) de l'installation de réception et du niveau de puissance de signal utile (4), et **en ce que**

- la sélection du signal utile de réception (3) par rapport au signal de bruit (21) de l'installation de réception s'effectue de telle sorte que le niveau de puissance de signal de bruit de l'installation de réception (2) est stocké dans l'unité de commande logique (7) et que le niveau de puissance du signal de réception bruité (E1, E2, E3, ...) est mesuré en tant que niveau de puissance de signal utile et de signal de bruit, et le niveau de puissance de signal utile (4) du signal utile de réception (3) est déterminé en soustrayant le niveau de puissance de signal de bruit (23) du niveau de puissance du signal de réception bruité (E1, E2, ...) et ainsi l'amplitude de l'oscillation du signal utile de réception (3) est déterminé pour réaliser avec cette amplitude la mise en phase des signaux utiles de réception (3) dans les signaux de réception bruités (E1, E2, ...).

**2.** Installation de réception selon la revendication 1,
**caractérisée en ce que**
l'écart de phase $\Delta\phi$ de la phase de consigne du signal utile de réception (3) par rapport à la phase de référence (80) constatée dans le récepteur lors de la réception de symboles de référence, écart qui est possible après les cycles de contrôle par les réglages de phase effectués pour la mise en phase des signaux utiles de réception (3) des signaux de réception (E1, E2, ...), est compensé de telle sorte que l'écart de phase $\Delta\phi$ constaté est amené à l'unité de commande logique (7) par laquelle les organes de rotation de phase ($\phi$1, $\phi$2, ...) sont réglés en correspondance de la compensation, moyennant quoi tous les signaux utiles de réception d'antenne (3) prennent leur phase de consigne commune sous forme de phase de référence.

**3.** Installation de réception selon la revendication 1,
**caractérisée en ce que**
un écart de phase $\Delta\phi$ du signal utile de réception (8) dans le signal combiné (8), qui est dû au cycle de contrôle est corrigé du fait qu'un organe de correction de phase (68) existe après le circuit de combinaison (5) dans le trajet de réception, organe auquel est amené un signal de correction de phase (69) qui est déduit de l'écart de phase $\Delta\phi$, constaté dans le récepteur, de la phase de consigne du signal utile de réception (8) dans le signal combiné (8) entre un symbole de référence reçu avant et après le cycle de contrôle et ayant la même phase de référence (80), de sorte qu'un signal combiné (8) modulé en phase n'est pas falsifié par la mise en phase.

**4.** Installation de réception selon la revendication 2 et 3,
**caractérisée en ce que**
lors d'une émission côté émetteur d'un signal de salve avec une série de symboles de référence sous la forme d'un mot code ayant une phase de référence respective connue mais différente (80), l'écart de phase $\Delta\phi$, affiché dans le récepteur, du signal utile de réception (3) dans le signal combiné (8) par rapport à la phase de référence (80) est déterminé du côté récepteur à titre de valeur moyenne des écarts de phase individuels par rapport à la phase de référence (80) du groupe de symboles de référence du mot code.

**5.** Installation de réception selon la revendication 1,
**caractérisée en ce que**
le cycle de contrôle est conçu de telle sorte qu'un seul des signaux de réception respectif (E1, E2, ...) est laissé passer successivement à l'aide des signaux de commande de commutation (15), et l'écart du signal utile de réception (3) du signal de réception concerné (E1, E2, ...) par rapport à la phase de référence (80), écart qui est affiché dans le récepteur lors de la réception de symboles de référence, est amené à tire de différence de phase $\alpha_i$ à l'unité de commande logique (7), par lequel la valeur de phase apte à la remise à zéro de la différence de phase $\alpha_i$ de l'organe de rotation de phase concerné ($\phi 1$, $\phi 2$) est réglée et la mise en phase de ainsi atteinte après le traitement cyclique de tous les signaux de réception (E1, E2, ...), tout le cycle de contrôle pour la mise en phase de tous les signaux utiles de réception (3) s'effectuant pendant la réception d'un signal de salve à l'aide des symboles de référence contenus dans celui-ci.

6. Installation de réception selon la revendication 2,
   **caractérisée en ce que**
   pendant la réception des symboles de référence émis du côté émetteur avec les phases de référence (80) connues qui leurs sont associées, un seul signal de réception respectif (E1, E2, ...) est laissé passer par les commutateurs (S1 - S4) vers le récepteur dans le cadre d'un cycle de contrôle, et ainsi la phase du signal (8) de l'antenne concernée est déterminée dans le récepteur et est mémorisée dans l'unité de commande logique (7), et cette opération est exécutée successivement pour toutes les antennes jusqu'à ce que les phases de tous les signaux utiles de réception d'antenne (3) sont mémorisées et que la mise en phase des signaux utiles de réception d'antenne (3) est ainsi provoquée au moyen du réglage des organes de rotation de phase par l'unité de commande logique (7).

7. Installation de réception selon l'une des revendications 1 à 6,
   **caractérisée en ce que**
   les intervalles de temps ($T_z$) entre les signaux de cycle de contrôle de niveau (10) sont choisi si courts que le trajet parcouru pendant cet intervalle de temps ($T_z$) n'est pas supérieur à 1/4 de la longueur de l'onde porteuse à haute fréquence.

8. Installation de réception selon l'une des revendications 1 à 7,
   **caractérisée en ce que**
   dans l'installation à antennes multiples (1), il existe N antennes (Ant1, Ant2, ... AntN) et N éléments de commutation (S1, S2, ... SN), et un signal de cycle de contrôle (10) est conçu par un algorithme (16), stocké dans l'unité de commande logique (7), pour déterminer par calcul les différences de phase des signaux de réception (E1, E2, ...) situés à l'entrée du circuit de combinaison (5), de telle sorte qu'au début deux échantillons de niveau de signal utile (4) sont récupérés en fermant alternativement deux éléments de commutation (S1, S2) d'une première et d'une seconde antenne (Ant1, Ant2) et un échantillon de niveau de signal utile (4) est récupéré en fermant simultanément les deux éléments de commutation (S1, S2) attribués à ces antennes (Ant1, Ant2), alors que tous les autres éléments de commutation (S3, ..., SN) sont respectivement à l'état ouvert, et à partir de ces trois échantillons de niveau de signal utile (4) la différence de phase des signaux de réception (E1, E2) attribués situés à l'entrée du circuit de combinaison (5) est calculée, et par réglage de l'organe de rotation de phase ($\phi 2$) il se présente une mise en phase des deux signaux de réception (E1, E2), et **en ce que**, le cas échéant pour la mise en phase successive du signal de réception d'une autre antenne (Ant3), les éléments de commutation (S1, S2) des organes de rotation de phase ($\phi 1$, $\phi 2$), déjà réglés pour la mise en phase, des antennes (Ant1, Ant2) sont commutés en sens opposé, en conservant le réglage des organes de rotation de phase ($\phi 1$, $\phi 2$), et les deux premières antennes (Ant1, Ant2) ainsi combinées prennent la place de celle qui était auparavant la première antenne (Ant1) pour ce qui concerne le déroulement de la mise en phase, et l'élément de commutation (S3) de l'autre antenne (Ant3) est réglé en correspondance de celle qui était auparavant la seconde antenne (Ant2) pour déterminer des échantillons de niveau de signal utile (4) correspondants, et par réglage de l'organe de rotation de phase ($\phi 3$) de l'autre antenne (Ant3) à l'aide de la différence de phase déterminée, une mise en phase des signaux de réception (E1, E2, E3) à l'entrée du circuit de combinaison (5) est atteinte, et ainsi de suite, jusqu'à ce que, par répétition de la procédure, la superposition en phase est établie pour tous les N signaux de réception (E1, E2, E3, ..., EN) dans le signal combiné (8).

9. Installation de réception selon l'une des revendications 1 à 8,
   **caractérisée en ce que**
   pour déterminer le niveau de puissance de signal-bruit, il est prévu un amplificateur de référence dont la puissance est détectée, et **en ce que** la mesure de la puissance du signal de réception bruité (13) d'une antenne (Ant1, Ant2, ..., AntN) est définie par commutation de ces antennes (Ant1, Ant2, .. AntN) par les éléments de commutation réglables (S1, S2, ...) et par détection de leur puissance de signal (40).

10. Installation de réception selon l'une des revendications 1 à 9,
    **caractérisée en ce que**

le niveau de puissance de signal de bruit (23) dans le signal combiné (8) est déterminé à l'intérieur d'un intervalle de fréquence qui est au voisinage du canal de fréquence de réception, mais qui ne contient pas de parts spectrales d'un signal émis par un satellite, la largeur de bande de fréquence de l'installation à antennes multiples (1) recouvrant en supplément cet intervalle de fréquence, et il existe un indicateur de niveau de bruit adapté à l'intervalle de fréquence et conçu sélectivement en fréquence, par lequel le niveau de puissance de signal de bruit (23) dans cet intervalle de fréquence est déterminé, et un niveau de puissance de signal de bruit (23) est détecté de façon représentative dans le canal de fréquence de réception, et son niveau de puissance de signal utile (4) est déterminé par détection respective de la puissance totale de l'un des signaux de réception (E1, E2, ..., EN).

**11.** Installation de réception selon l'une des revendications 1 à 10,
**caractérisée en ce que**
deux passe-bandes de fréquence ayant différentes largeurs de bande Bnutz et B2, avec B2 > Bnutz, sont connectés en aval d'une conversion de fréquence dans une partie Hf-ZF (12), les deux passe-bandes de fréquence recouvrant par leurs gammes de fréquence de passage le canal de fréquence utile ZF respectif, et la puissance P1 à la sortie du passe-bande de fréquence cité en premier et la puissance P2 à la sortie du passe-bande cité en deuxième sont détectées, et à partir de ces deux puissances et du rapport des deux largeurs de bande (Bnutz/B2), le niveau de signal utile (4) est déterminé dans le moyen de commutation logique (7), et la mise en phase des signaux utiles de réception (3) s'effectue selon un algorithme en se basant sur le niveau de signal utile (4) ainsi déterminé.

**12.** Installation de réception selon l'une des revendications 1 à 11,
**caractérisée en ce que**
la détermination des phases et des niveaux est effectuée du côté du circuit récepteur (2), et une unité d'évaluation (18) effectue la définition des positions de commutation et de phase à réaliser, qui sont à régler dans une unité à diversité (26) associée aux antennes (Ant2, ... AntN), et **en ce que** l'unité d'évaluation (18) envoie à cet effet un signal de commande (19) à un élément de commande logique (20) situé dans l'unité à diversité (26) pour le réglage des commutateurs et des déphaseurs, signal qui est transmis entre le circuit récepteur (2) et l'unité à diversité (26) à l'aide d'un circuit diviseur de fréquence (27) via la ligne de réception (28).

Fig. 1

EP 2 209 221 B1

Fig. 2

EP 2 209 221 B1

Fig. 3

Nutzsignalpegel(Antenne Nr.i)=
Signalpegel(Antenne Nr.i) -
Rauschsignalpegel(Referenzverstärker)

7

10

11

60

40  Signalpegel

80

Referenzphase

1

Ant1

Ant2

Ant3

74

Referenz
verstärker

15

S1,S2,S3,S4

9,9a

Φ1  E1

Φ2  E2

Φ3  E3

71  E4

5

8

13

12

62

2  Tuner und
DSP

Fig. 4

Integrator (Pegel-detektor)

11 → 10

6

4 Nutzsignal-Pegel

67 Nutzsignal

7

40

60

1

15

9,9a

Ant1

Ant2

Ant3

Ant4

S1,S2,S3,S4

Φ1 E1

Φ2 E2

Φ3 E3

Φ4 E4

5

8

64

Verzögerung mit Durchlaufzeit T

65

Multi-plikator

12

Verrauschtes Signal

13

62

Digitalcode-Erkennung mit Durchlaufzeit T

2

70 Digitalcode

EP 2 209 221 B1

Fig. 5

Referenzphasen-code-Generator 71

70 Digitalcode

Schalter 73

Multi-plikator 65

65

72 90°glied

67b Im(Nutzsignal)

67a Re(Nutzsignal)

6

6

64 Verzögerung mit Durch-laufzeit T

Integrator (Pegel-detektor)

Digitalcode-Erkennung mit Durchlaufzeit T 62

13 Verrauschtes Digitalcode-Signal

12

2

4b Im(Pegel)

4a Re(Pegel)

7

5

8

E1

E2

E3

E4

9,9a

Φ1

Φ2

Φ3

Φ4

15

S1,S2,S3,S4

1

Ant1

Ant2

Ant3

Ant4

10

11

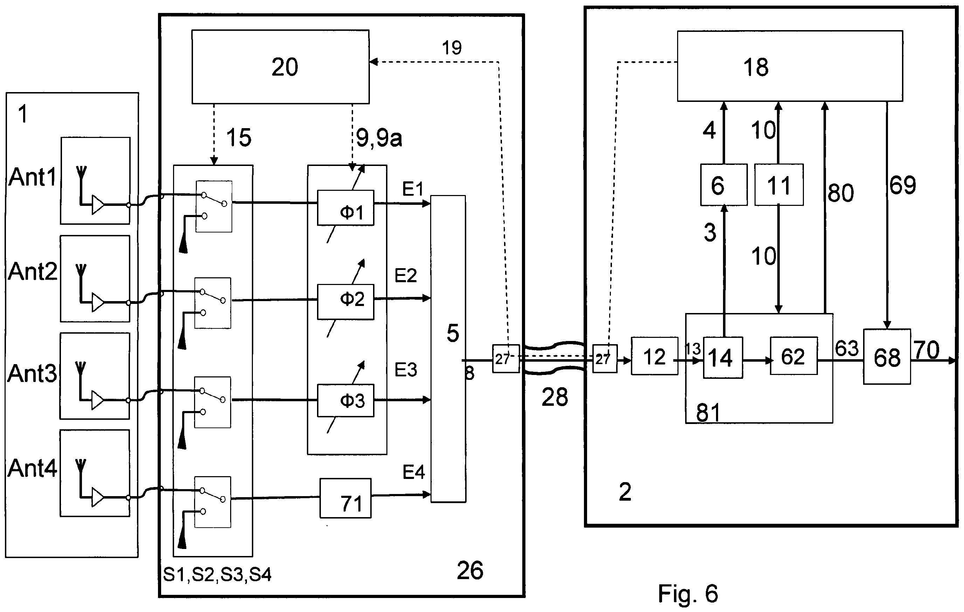

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1798870 A2
- US 5517686 A
- US 4079318 A
- DE 4326843
- DE 102006057520
- US 2007135056 A1
- EP 1422848 A2

### In der Beschreibung aufgeführte Nicht-Patentliteratur

- Unified analysis of generalized selection diversity with normalized threshold test per branch. **ANNAMALAI A et al.** 2003 IEEE WIRELESS COMMUNICATIONS AND NETWORKING CONFERENCE RECORD : 16 - 20 MARCH 2003. IEEE OPERATIONS CENTER, 16. Marz 2003, vol. 2, 752-756
- Phase Estimation for Coherent Optical OFDM. **XINGWEN YI et al.** IEEE PHOTONICS TECHNOLOGY LETTERS. IEEE SERVICE CENTER, 15. Juni 2007, vol. 19, 919-921
- Improved Y factor noise measurement using the second stage contribution to advantage. **VICTOR A M et al.** ARFTG CONFERENCE DIGEST, 2005. SPRING 2005. 65TH LONG BEACH, CA, USA 17 JUNE 2005. IEEE, 17. Juni 2005, 90-92